(19) **Europäisches Patentamt** / **European Patent Office** / **Office européen des brevets**

(11) **EP 2 397 870 B1**

(12) **FASCICULE DE BREVET EUROPEEN**

(45) Date de publication et mention
de la délivrance du brevet:
**03.04.2013 Bulletin 2013/14**

(51) Int Cl.:
**G01T 1/164** *(2006.01)*

(21) Numéro de dépôt: **11352001.9**

(22) Date de dépôt: **07.02.2011**

(54) **Dispositif de détection de rayonnements photoniques, et procédé de dimensionnement et de fonctionnement d'un tel dispositif**

Photonendetektor, und Verfahren zur Dimensionierung und Benutzung eines solchen Detektors

Photon radiation detection device, and procedure for dimensioning and operating such a device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.02.2010 FR 1000499**

(43) Date de publication de la demande:
**21.12.2011 Bulletin 2011/51**

(73) Titulaire: **COMMISSARIAT A L'ENERGIE ATOMIQUE ET AUX ENERGIES ALTERNATIVES**
**75015 Paris (FR)**

(72) Inventeurs:
- **Robert, Charlotte**
  **35150 Brie (FR)**
- **Montemont, Guillaume**
  **38000 Grenoble (FR)**
- **Rebuffel, Véronique**
  **38700 Corenc (FR)**

(74) Mandataire: **Santarelli**
**Immeuble Innopolis A**
**2ème étage**
**1149 La Pyrénéenne**
**CS 77697**
**31676 Labège Cedex (FR)**

(56) Documents cités:
- **GUILLAUME MONTEMONT ET AL: "CZT pixel detectors for improved SPECT imaging", NUCLEAR SCIENCE SYMPOSIUM CONFERENCE RECORD, 2008. NSS '08. IEEE (19-25 OCT. 2008), IEEE, PISCATAWAY, NJ, USA, 19 octobre 2008 (2008-10-19), pages 84-89, XP031419399, ISBN: 978-1-4244-2714-7**
- **ANDREAS R FORMICONI ET AL: "Study of High-Energy Multihole Collimators", IEEE TRANSACTIONS ON NUCLEAR SCIENCE, IEEE SERVICE CENTER, NEW YORK, NY, US, vol. 49, no. 1, 1 février 2002 (2002-02-01), XP011077435, ISSN: 0018-9499**

EP 2 397 870 B1

**Description**

La présente invention concerne un dispositif de détection de rayonnements photoniques. Un tel dispositif de détection est notamment utilisé dans les domaines de l'imagerie médicale, de l'imagerie astronomique, du nucléaire et de l'inspection industrielle. Le dispositif de détection selon l'invention est plus particulièrement adapté à l'imagerie médicale. Un tel dispositif peut être intégré dans une gamma-caméra médicale, par exemple une gamma-caméra utilisée pour la scintigraphie en association avec le radioisotope $^{99m}$Tc.

Les gamma-caméras connues comprennent des dispositifs de détection essentiellement constitués par un détecteur, un collimateur et des moyens informatiques de traitement.

Le détecteur peut comprendre un matériau scintillateur, tel l'Iodure de Cesium, et par exemple CsI(Tl), l'iodure de Sodium, et par exemple NaI(Tl), le Bromure de Lanthane (LaBr$_3$) ou le Germanate de Bismuth (BGO), associé à des photodétecteurs, par exemple une matrice de photodiodes, notamment des photodiodes à avalanche, une matrice CCD ou un capteur CMOS. On parle alors de détecteur scintillateur. L'épaisseur de matériau scintillateur est généralement comprise entre quelques μm et quelques mm. Lorsqu'un photon pénètre dans le matériau scintillateur et interagit avec celui-ci, il produit des photons de moindre énergie, généralement dans le spectre visible. Ces photons sont ensuite collectés par au moins un photodétecteur couplé au matériau scintillateur, puis transformés en un signal électrique exploitable. Un détecteur scintillateur comprend usuellement une pluralité de pixels, chaque pixel correspondant à au moins une photodiode, ou à au moins un pixel d'une matrice CCD ou CMOS.

Alternativement, le détecteur comprend au moins un matériau détecteur semi-conducteur, susceptible d'être polarisé par une cathode et une anode, ces électrodes étant généralement disposées sur deux faces opposées du matériau semi-conducteur. On parle alors de détecteur semi-conducteur. Lorsqu'un photon pénètre dans le matériau semi-conducteur et interagit avec celui-ci, tout ou partie de son énergie est transférée à des porteurs de charges dans le matériau semi-conducteur. Le détecteur étant polarisé, les porteurs de charges migrent vers les électrodes (dont l'anode). Ils produisent alors un signal électrique aux bornes des électrodes. Ce signal électrique, dont l'amplitude est proportionnelle à l'énergie déposée par le photon lors de l'interaction, est collecté puis traité. Selon la nature du détecteur, le signal est collecté uniquement à l'anode (cas le plus fréquent), uniquement à la cathode, ou aux deux électrodes. Un détecteur semi-conducteur comprend usuellement une pluralité de pixels physiques, chaque pixel physique correspondant à un circuit de collecte de charges par une électrode.

Le collimateur permet de sélectionner les photons arrivant sur le détecteur. Il est formé de canaux délimités par des parois fines appelées septas. Ces canaux (ou plus précisément les trous correspondants) peuvent être de section circulaire, hexagonale ou carrée ; ils peuvent être parallèles, divergents ou convergents.

Les gamma-caméras connues peuvent être utilisées soit en mode planaire, soit en mode tomographique. En mode planaire, l'acquisition est réalisée selon un seul angle de vue, la tête de la caméra restant fixe durant tout l'examen. La projection et donc l'image reconstruite présentent l'inconvénient de n'intégrer aucune information sur la localisation en profondeur des éléments radioactifs distribués dans le patient. En mode tomographique, la tête de la caméra, comprenant le détecteur et le collimateur, décrit une orbite circulaire ou elliptique autour du patient, et une pluralité de projections sont acquises à différents angles de vue. Des techniques de reconstruction sont alors mises en oeuvre pour réaliser des images interprétables par le praticien. Le mode tomographique permet notamment d'obtenir une information sur la localisation en profondeur des éléments radioactifs distribués dans le patient.

Les performances des dispositifs de détection sont usuellement caractérisées par un certain nombre de paramètres, parmi lesquels :

- la résolution spatiale, qui correspond à la distance minimale entre deux sources ponctuelles qui pourront être discernées sur une image planaire (image résultant d'une projection sous un seul angle de vue) ou sur une image reconstruite (à partir de plusieurs projections). Elle est usuellement donnée par la largeur à mi-hauteur de la fonction de dispersion ponctuelle ou linéaire (obtenue en imageant une source ponctuelle ou linéaire, respectivement). La résolution spatiale résulte de la résolution spatiale intrinsèque du détecteur et de la résolution spatiale géométrique du collimateur ;
- la résolution en énergie, qui illustre la capacité d'un dispositif de détection à sélectionner précisément les photons en fonction de leur énergie. Elle est exprimée en pourcents et est donnée par la largeur à mi-hauteur ΔE de la réponse en énergie du dispositif pour l'énergie d'émission E de la source (c'est-à-dire du radioisotope utilisé) ;
- la sensibilité, encore appelée efficacité. Elle peut être définie par le rapport du nombre de photons primaires détectés (photons n'ayant subi aucune interaction avant d'atteindre le matériau détecteur) au nombre total de photons émis par la source sur 4n stéradians. La sensibilité dépend de l'efficacité du détecteur (pouvoir d'arrêt du matériau détecteur) et de l'efficacité géométrique du collimateur (qui est faible puisque le collimateur impose une forte sélection spatiale des photons et, de ce fait, absorbe la majorité d'entre eux). Plus la sensibilité d'un dispositif de détection est faible, plus le temps d'acquisition doit être long pour obtenir des statistiques satisfaisantes sur les projections acquises.

**EP 2 397 870 B1**

En règle générale, ces paramètres varient inversement : l'amélioration d'un des paramètres conduit à la dégradation d'un ou de plusieurs autres paramètres. Tel est par exemple le cas de la résolution spatiale et de la sensibilité. De même, comme l'enseigne la publication *« Study of high-energy multihole collimators »* (Andreas R.Formiconi, XP011077435), en écartant le collimateur du détecteur, on peut minimiser les artefacts causés par les rangées de canaux du collimateur, mais la résolution spatiale s'en trouve dégradée. Lorsqu'il conçoit un dispositif de détection, l'homme du métier doit donc choisir (notamment en fonction de la destination du dispositif) le ou les paramètres qu'il souhaite privilégier au détriment des autres, ou accepter un compromis.

Actuellement, les services de médecine nucléaire utilisent principalement des caméras dites caméras d'Anger, dont le détecteur comprend un scintillateur Nal(TI) et dont le collimateur est formé de canaux parallèles de section hexagonale (nid d'abeille). Un tel dispositif impose un compromis entre résolution spatiale et sensibilité : pour une source de 140 keV placée à 10 cm du collimateur, la résolution spatiale est de 10 mm et la sensibilité, telle que précédemment définie, est de $10^{-4}$. La résolution spatiale est notamment limitée par celle du scintillateur, qui est de quelques mm, par exemple 3 mm. De plus, l'image présente un faible contraste en raison d'une résolution en énergie médiocre du scintillateur (10% à 140 keV).

L'émergence des détecteurs semi-conducteurs, tels que les détecteurs à base de CdTe, CdZnTe (CZT), silicium (Si) ou Hgl2, a permis d'envisager une nouvelle génération de gamma-caméras. Contrairement aux scintillateurs, les semi-conducteurs sont des matériaux à conversion directe : suite à l'interaction des rayonnements gamma, ils créent, sans étape intermédiaire, des charges électriques, c'est-à-dire des couples électron-trou (les électrons migrant vers l'anode, les trous vers la cathode). Ces détecteurs permettent généralement l'utilisation de matériaux semi-conducteurs d'épaisseur comprise entre quelques $\mu$m à quelques mm, voire davantage, sans que l'augmentation de l'épaisseur s'accompagne d'une dégradation drastique de la résolution spatiale.

Ainsi par exemple, le prototype connu sous le nom de PEGASE intègre un détecteur semi-conducteur CZT et un collimateur à canaux parallèles de section carrée, un trou du collimateur correspondant à un pixel du détecteur. Le détecteur utilisé présente une résolution en énergie améliorée (comprise entre 3% et 5% à 140 keV, contre 10 % pour le scintillateur Nal(TI)), qui se traduit par une augmentation sensible du contraste de l'image. En revanche, bien que son détecteur possède une meilleure résolution spatiale intrinsèque, pouvant aller par exemple de 1,6 à 2,5 mm, le prototype PEGASE offre des performances quasi-identiques à celles des gamma-caméra d'Anger en termes de résolution spatiale et de sensibilité.

Le problème s'est donc posé d'améliorer les performances des dispositifs de détection connus, tant en ce qui concerne le flux de photons captés, c'est à dire la sensibilité (limitée du fait de la présence du collimateur), que la résolution spatiale, en vue de briser enfin le compromis imposé depuis la naissance de la gamma-caméra d'Anger.

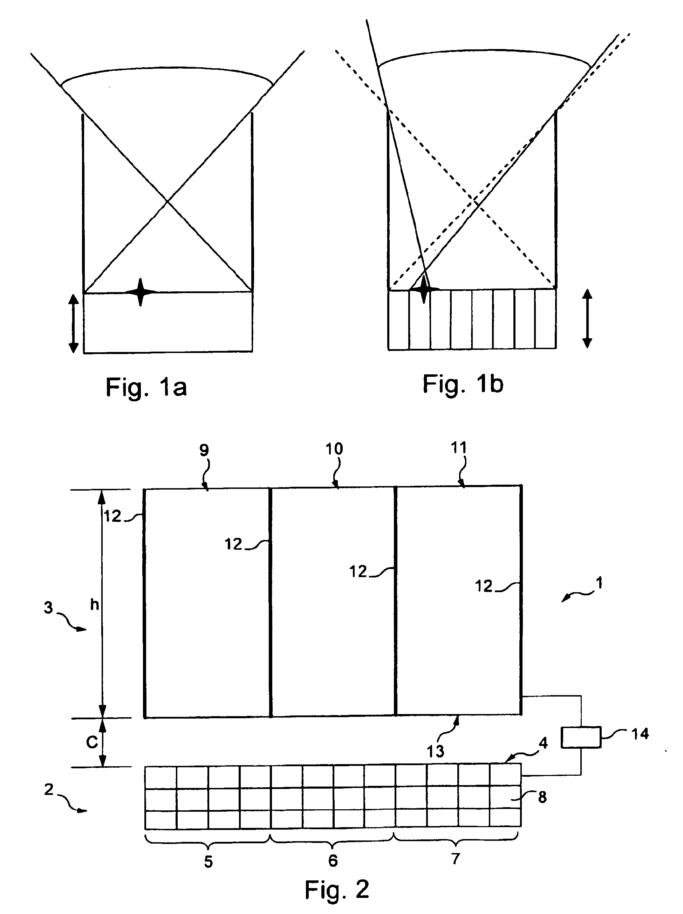

A cette fin, les chercheurs ont principalement tâché d'affiner la localisation, au sein de chaque pixel, d'une interaction de photon ayant lieu dans ce pixel. Comme l'illustrent les figures 1 a et 1b annexées, une meilleure localisation de l'interaction permet en effet de réduire le secteur angulaire dont provient le photon détecté, et d'améliorer par conséquent la localisation de la source d'émission.

Une première méthode a consisté à compenser une connaissance trop approximative du lieu de l'interaction dans le détecteur par des translations du collimateur ou du détecteur selon des directions X et Y du plan de détection. Dans toute la description, l'expression « plan de détection » désigne le plan frontal du détecteur situé du côté du collimateur. La réalisation d'une pluralité de projections, correspondant à différentes positions relatives du collimateur et du détecteur, permet alors, par combinaison des différentes images obtenues, d'améliorer la résolution spatiale. Cette première méthode a été proposée avec un collimateur présentant des trous ayant une dimension transversale (diamètre, côté...) inférieure à la moitié de celle des pixels, ainsi qu'avec un collimateur haute efficacité (et donc à "larges" trous). Cette première méthode n'est toutefois pas sans inconvénient. Elle oblige à doter le dispositif de détection de moyens de translation dans le plan de détection selon deux directions, moyens généralement complexes et coûteux. En multipliant le nombre de projections (et d'acquisitions) nécessaires, elle augmente de plus les temps d'acquisition, ce qui pénalise les cadences de consultation des centres d'imagerie médicale.

Une deuxième méthode a consisté à diminuer la taille des pixels de façon à obtenir un degré de pixellisation dans le plan de détection supérieur à 1. On parle alors de sur-pixellisation. Dans toute la description, l'expression "degré de pixellisation dans le plan de détection" désigne le nombre de pixels s'étendant en regard, selon une direction Z orthogonale au plan de détection, d'un canal du collimateur. Lorsque ce degré est supérieur à 1, à chaque canal du collimateur correspond plus d'un pixel. En d'autres termes, les dimensions transversales des pixels sont alors inférieures à celles des canaux du collimateur. A noter qu'on entend par "dimensions transversale des pixels" les dimensions de chaque pixel dans le plan de détection ; l'expression "dimensions transversales des canaux" désigne par ailleurs les dimensions du trou de chaque canal dans un plan frontal du collimateur, dit plan intérieur, s'étendant en regard du plan de détection.

Une telle sur-pixellisation dans le plan de détection permet de s'affranchir des translations du collimateur ou du détecteur dans le plan (X, Y) qui étaient nécessaires dans la première méthode, et de limiter les temps d'acquisition. Elle peut être obtenue physiquement ou virtuellement.

On parle de sur-pixellisation physique lorsque le détecteur présente une pluralité de pixels physiques en regard de chaque canal du collimateur. La sur-pixellisation physique nécessite toutefois une multiplication des voies électroniques et peut poser certains problèmes technologiques liés à la taille des pixels physiques.

Il a, en variante, été proposé de réaliser une sur-pixellisation virtuelle dans le plan de détection, en augmentant virtuellement le nombre de pixels du détecteur. Cette approche, décrite dans la publication « *CZT Pixel detectors for improved SPECT imaging* » (Guillaume Montémont, XP031419399) permet de diviser chaque pixel physique en une pluralité de pixels virtuels dans le plan (X, Y) de détection.

Ce document décrit donc un dispositif de détection de rayonnements photoniques, comprenant :

- un collimateur comprenant une pluralité de canaux,
- un détecteur comprenant un matériau détecteur et présentant, du côté du collimateur, un plan frontal dit plan de détection,
- des moyens de détermination d'une information relative à la localisation, selon des directions X et Y parallèles au plan de détection, d'une interaction de photon avec le matériau détecteur, ces moyens, dits moyens de localisation dans le plan de détection, permettant d'une part de définir une partition du plan de détection en pixels physiques ou virtuels de dimensions transversales inférieures à celles des canaux du collimateur, et d'autre part d'associer l'un desdits pixels à chaque interaction de photon, et
- au moins dans une configuration d'acquisition préalablement sélectionnée, un degré de pixellisation dans le plan de détection supérieur à 1.

Comme l'enseigne la publication "An approach to sub-pixel spatial resolution in room temperature X-ray detector arrays with good energy resolution" (W.K. Warburton), il est possible de déterminer les coordonnées (x, y) du barycentre du nuage de charges produit par une interaction, à partir de signaux électriques simultanément générés par cette interaction sur une pluralité d'anodes adjacentes. On considère alors que l'interaction a été détectée uniquement par le pixel virtuel correspondant aux coordonnées du barycentre. Sans une telle méthode, seules les coordonnées du pixel physique ayant collecté le signal maximal sont utilisées. La localisation barycentrique permet aujourd'hui d'atteindre des tailles (surfaces) de pixels virtuels pouvant être de l'ordre du dixième de la taille de pixels physiques. Un canal du collimateur fait alors face à une pluralité de pixels virtuels. Par rapport à la sur-pixellisation physique, la sur-pixellisation virtuelle présente l'avantage d'être accessible sans multiplication des voies électroniques. On comprend donc que la sur-pixellisation dans le plan de détection correspond à la multiplication de pixels en vis-à-vis d'un canal du collimateur. Cette sur-pixellisation dans le plan de détection peut être physique ou virtuelle, la combinaison d'une sur-pixellisation physique et d'une sur-pixellisation virtuelle étant également envisageable.

Enfin, WO2008/046971 propose d'affiner plus encore la localisation des interactions, non seulement en divisant chaque pixel en plusieurs pixels virtuels dans le plan de détection (X, Y), mais de plus en divisant virtuellement l'épaisseur de matériau détecteur en une pluralité de couches (de 1 mm d'épaisseur par exemple). En d'autres termes, il s'agit ici de déterminer une coordonnée de l'interaction selon l'axe Z. Le détecteur s'apparente alors à une matrice 3D d'éléments unitaires virtuels de détection, appelés voxels. Là encore, l'information supplémentaire fournie permet d'affiner la localisation spatiale de la source et donc d'améliorer la résolution spatiale du dispositif de détection.

Les récentes évolutions relatées ci-dessus ont donc permis d'augmenter la résolution spatiale des dispositifs de détection. Les progrès accomplis restent toutefois insatisfaisants si l'on considère qu'aucun des dispositifs proposés jusqu'ici n'utilise pleinement les capacités des semi-conducteurs. Aussi et surtout, la sensibilité de ces dispositifs reste faible. L'invention vise à fournir un dispositif de détection de rayonnements photoniques offrant des performances améliorées. En particulier, l'invention vise à fournir un dispositif de détection possédant une meilleure sensibilité, tout en ayant une résolution spatiale au moins similaire -et de préférence inférieure (c'est-à-dire meilleure)- à celle des dispositifs connus. A cette fin, l'invention s'attache essentiellement à fournir un dispositif de détection ayant une résolution spatiale plus faible afin de pouvoir l'équiper d'un collimateur de grande efficacité.

Un autre objectif de l'invention est de proposer un dispositif de détection particulièrement adapté à l'application concernée, et notamment à la partie du corps humain destinée à être analysée (dans le cas d'un dispositif de détection pour caméra médicale). L'invention vise notamment à permettre de fournir le meilleur dispositif de détection possible eu égard à une plage de fréquences spatiales d'intérêt correspondant à l'application concernée. L'invention s'étend alors à un procédé de dimensionnement d'un dispositif de détection de rayonnements photoniques, ainsi qu'à un procédé de fonctionnement d'un tel dispositif.

On rappelle tout d'abord qu'un objet à imager présente différentes fréquences spatiales. Les fréquences spatiales basses correspondent aux zones étendues, présentant un niveau de gris homogène, tandis que les fréquences spatiales élevées correspondent aux transitions brusques du niveau de gris (par exemple contours ou détails). Les fréquences spatiales d'une image sont usuellement déterminées par une transformée de Fourier. Il est généralement considéré que le contraste d'une image dépend des fréquences spatiales faibles, et que la résolution dépend des fréquences spatiales élevées. En outre, plus l'objet recherché est petit, plus le dispositif de détection doit privilégier les fréquences spatiales hautes. Selon les applications concernées, on peut privilégier une réponse optimisée à de faibles fréquences spatiales (on aura alors une bonne sensibilité, mais une image floue) ou à des fréquences spatiales élevées (on distinguera alors bien les détails, comme les contours).

En imagerie cardiaque, les fréquences spatiales d'intérêt sont comprises entre 0 et 1,2 cm$^{-1}$. Cette limite supérieure en fréquence équivaut à une résolution spatiale d'environ 9 mm, soit celle d'une gamma-caméra d'Anger. En mammographie (application dans laquelle les objets recherchés sont de plus petites tailles et notamment de tailles inférieures à 5 mm), les fréquences spatiales d'intérêt sont comprises entre 0 et 3 cm$^{-1}$.

L'invention propose un dispositif de détection de rayonnements photoniques tel que décrit dans la revendication 1.

Selon un mode de réalisation préféré, les moyens de localisation dans le plan de détection sont aptes à définir une sur-pixellisation virtuelle du détecteur dans le plan de détection : ils permettent alors de définir une partition du plan de détection en pixels virtuels de dimensions transversales inférieures à celles des canaux du collimateur.

Ce mode de réalisation préféré n'exclut pas la possibilité d'utiliser des moyens de localisation dans le plan de détection aptes à définir une sur-pixellisation physique du détecteur dans le plan de détection : le détecteur comprend alors une matrice de pixels physiques dont les dimensions transversales sont inférieures à celles des canaux du collimateur.

L'invention repose donc sur la combinaison d'une sur-pixellisation du détecteur dans le plan de détection (c'est-à-dire d'une partition de celui-ci en pixels virtuels ou physiques de dimensions transversales inférieures à celles des canaux du collimateur) et d'un décalage entre le collimateur et le plan de détection. De façon surprenante, cette combinaison permet d'améliorer considérablement la résolution spatiale du dispositif de détection. Ce résultat est surprenant pour l'homme du métier qui, au vu d'études antérieures menées sur un détecteur non sur-pixellisé et relatées dans la publication « *Study of high-energy multihole collimators* », ne pouvait que s'attendre à ce qu'un tel décalage entraîne une dégradation de la résolution spatiale. La combinaison selon l'invention rend dès lors possible l'utilisation d'un collimateur de grande efficacité, c'est-à-dire de faible hauteur septale. Elle conduit par conséquent à une amélioration conjointe de la résolution spatiale et de la sensibilité. Les images reconstruites à partir d'un dispositif de détection selon l'invention sont à la fois nettes et contrastées.

Dans une première forme de réalisation de l'invention, le dispositif de détection présente une distance collimateur-détecteur fixe, qui est par conséquent supérieure au dixième (1/10$^{ème}$) de la hauteur septale du collimateur, que le dispositif fonctionne selon un procédé utilisant une seule configuration d'acquisition ou en utilisant plusieurs (comme expliqué plus loin). De préférence, cette distance collimateur-détecteur est supérieure à 2/10$^{ème}$, voire 3/10$^{ème}$, voire 4/10$^{ième}$ de la hauteur septale du collimateur.

Dans une deuxième forme de réalisation de l'invention, le dispositif de détection comprend des moyens de réglage de la distance collimateur-détecteur, par exemple des moyens mécaniques. Dans ce cas, le dispositif fonctionne de préférence selon un procédé mettant en oeuvre plusieurs configurations d'acquisition correspondant à des distances collimateur-détecteur différentes, dont au moins l'une est supérieure au dixième de la hauteur septale du collimateur, par exemple supérieure à deux, trois ou quatre dixièmes de la hauteur septale du collimateur.

Avantageusement, dans au moins une configuration d'acquisition, la distance collimateur-détecteur est supérieure à 1 mm, de préférence supérieure à 3 mm, voire 5 mm.

Afin de pouvoir fonctionner selon un procédé mettant en oeuvre plusieurs configurations d'acquisition (qu'il soit de distance collimateur-détecteur fixe ou variable) et/ou en mode tomographique, le dispositif de détection selon l'invention comprend avantageusement des moyens de reconstruction d'image aptes à déterminer un ensemble de données de rayonnement, dit projection combinée, permettant la reconstruction d'une image de la source de rayonnements photoniques, à partir d'une pluralité d'ensembles de données de rayonnement, dits projections unitaires, chaque projection unitaire résultant d'une opération d'acquisition de données de rayonnement par exposition du dispositif de détection à la source de rayonnements photoniques.

En mode planaire, on peut ainsi déterminer une projection combinée en changeant la configuration d'acquisition entre chaque opération d'acquisition, sans modifier la position du dispositif de détection par rapport à la source de rayonnements photoniques.

En mode tomographique, on réalise une projection combinée en changeant l'angle de vue du dispositif de détection par rapport à la source de rayonnements photoniques. Pour chaque angle de vue, on peut réaliser soit une seule opération d'acquisition (fournissant une projection unitaire), soit plusieurs opérations d'acquisition (fournissant plusieurs projections unitaires ou une projection combinée) correspondant à différentes configurations d'acquisition, de préférence en modifiant la distance collimateur-détecteur entre chaque opération d'acquisition.

Selon un mode de réalisation préféré, le matériau détecteur est un matériau semi-conducteur. En variante, le matériau détecteur est un matériau scintillateur.

Avantageusement, la distance collimateur-détecteur du dispositif selon l'invention est inférieure à la hauteur septale du collimateur dans toute configuration d'acquisition.

De préférence, le collimateur présente un axe central et une épaisseur septale constante dans au moins un plan orthogonal à son axe central. L'expression "épaisseur septale constante dans au moins un plan" signifie ici que les septas du collimateur présentent une épaisseur qui est identique d'un septa à un autre dans ce plan. De préférence, l'épaisseur septale d'un collimateur selon l'invention est constante dans tout plan orthogonal à son axe central.

De préférence et de façon usuelle, le collimateur est agencé de façon à ce que son axe central s'étende orthogonalement au plan de détection. Cet axe central coïncide avec celui d'un canal central du collimateur, et l'extrémité axiale de ce canal central située du côté du détecteur définit un plan, dit plan intérieur du collimateur, parallèle au plan de détection.

Selon des modes de réalisation préférés, le collimateur est un collimateur à canaux parallèles (cet agencement permet de conserver un large champ de vue) ou à canaux divergents ou à canaux convergents. En variante, il comprend une combinaison de canaux parallèles et non parallèles (convergents et/ou divergents), une telle combinaison pouvant par exemple correspondre à des collimateurs connus sous le nom de collimateurs multifocaux.

Avantageusement, le dispositif de détection selon l'invention présente de plus l'une ou plusieurs des caractéristiques suivantes :

- les canaux du collimateur présentent une section transversale carrée, de préférence identique d'un canal à un autre ;
- chaque canal du collimateur correspond (selon une direction Z orthogonale au plan de détection) à un unique pixel physique du détecteur et réciproquement ; dans ce cas, la sur-pixellisation dans le plan de détection, qui est définie par les moyens de localisation dans le plan de détection dans au moins une configuration d'acquisition préalablement sélectionnée, est virtuelle ;
- le dispositif de détection comprend des moyens de détermination d'une information relative à la profondeur d'une interaction de photon dans le matériau détecteur, ces moyens, dits moyens de localisation dans l'épaisseur, permettant de définir une partition de l'épaisseur du matériau détecteur en une pluralité de couches virtuelles et d'associer l'une desdits couches à chaque interaction de photon. Le détecteur s'apparente dans ce cas à une matrice 3D de voxels. On entend alors par "degré de pixellisation dans l'épaisseur", le nombre de couches virtuelles définies par les moyens de localisation dans l'épaisseur. Par ailleurs, l'expression "degré de pixellisation" regroupe à la fois les notions de sur-pixellisation dans le plan de détection et de sur-pixellisation dans l'épaisseur : les termes "degré de pixellisation" désignent le nombre de voxels s'étendant en regard d'un canal du collimateur.

Selon un mode de réalisation préféré, dans le cas d'un dispositif de détection destiné à être utilisé dans des applications de type mammographie :

- le collimateur présente une hauteur septale comprise entre 5 mm et 25 mm, préférentiellement comprise entre 10 mm et 20 mm, par exemple de l'ordre de 15 mm ; cela étant, un collimateur ayant une hauteur septale comprise entre 5 mm et 50 mm est conforme à l'invention ;
- les moyens de localisation dans le plan de détection sont aptes à définir des pixels virtuels ayant un pas compris entre 0,1 mm et 1 mm, préférentiellement compris entre 0,1 mm et 0,4 mm, par exemple égal à 0,2 mm ;
- les moyens de localisation dans l'épaisseur sont aptes à définir une partition du matériau détecteur en au moins trois couches virtuelles,
- la distance collimateur-détecteur est comprise entre le quart et la moitié de la hauteur septale du collimateur, au moins dans une configuration d'acquisition préalablement sélectionnée ; la distance collimateur-détecteur est par exemple de l'ordre de 5 mm lorsque la hauteur septale du collimateur est de l'ordre de 15 mm.

L'invention concerne également un procédé de dimensionnement d'un dispositif de détection de rayonnements photoniques, le dispositif de détection comprenant :

- un collimateur comprenant une pluralité de canaux,
- un détecteur comprenant un matériau détecteur et présentant, du côté du collimateur, un plan frontal dit plan de détection,
- des moyens de localisation dans le plan de détection, tels que précédemment définis.

Selon ce procédé de dimensionnement :

- on définit au moins une fréquence spatiale d'intérêt en fonction de l'application visée,
- on définit un modèle structurel de dispositif de détection, déterminé par un ensemble de valeurs de paramètres structurels de dimensionnement du collimateur et du détecteur,
- on définit au moins deux configurations d'acquisition dudit modèle structurel, chaque configuration d'acquisition étant déterminée par une distance collimateur-détecteur et un degré de pixellisation, au moins l'une desdites configurations d'acquisition correspondant à une distance collimateur-détecteur supérieure au dixième de la hauteur septale du collimateur et à un degré de pixellisation dans le plan de détection supérieur à 1,

- on utilise un indicateur de mérite permettant de représenter le rapport signal sur bruit et/ou la sensibilité et/ou la résolution spatiale du dispositif de détection en fonction de la fréquence spatiale,
- on calcule la valeur de cet indicateur de mérite pour chaque fréquence spatiale d'intérêt et pour chaque configuration d'acquisition préalablement définies,
- on compare les valeurs d'indicateur de mérite obtenues, et on sélectionne au moins l'une des configurations d'acquisition au vu des résultats de cette comparaison.

On comprend, à la lecture de la définition ci-dessus, qu'un modèle structurel est déterminé par des paramètres structurels qui, par définition, sont figés une fois que leur sont attribuées des valeurs et que le dispositif de détection est fabriqué. Ces paramètres structurels sont choisis parmi : la hauteur septale du collimateur, l'épaisseur septale du collimateur, l'agencement relatif des canaux du collimateur, la forme de la section transversale desdits canaux, les dimensions transversales desdits canaux, les dimensions frontales du collimateur, la nature du matériau détecteur, les dimensions du plan de détection, l'épaisseur du matériau détecteur, le nombre de pixels physiques du détecteur, la forme de la section transversale desdits pixels physiques, les dimensions transversales desdits pixels physiques.

A l'inverse, une configuration d'acquisition d'un tel modèle structurel est déterminée par des paramètres (distance collimateur-détecteur, degré de pixellisation -dans le plan de détection et dans l'épaisseur-) qu'il est possible de modifier à l'utilisation du dispositif de détection, grâce à des moyens de réglage ou à des traitements électroniques et/ou informatiques correspondants. Il est à noter que chaque configuration d'acquisition correspond à un degré de pixellisation dans le plan de détection et à un degré de pixellisation dans l'épaisseur. Cela étant, la seule exigence imposée lors de la définition des configurations d'acquisition dans le procédé de dimensionnement selon l'invention concerne le degré de pixellisation dans le plan de détection : au moins l'une des configurations d'acquisition définies doit présenter un degré de pixellisation dans le plan de détection supérieur à 1, combiné à une distance collimateur-détecteur supérieure au dixième de la hauteur septale du collimateur.

Dans une version préférée du procédé de dimensionnement selon l'invention :

- on définit une plage de fréquences spatiales d'intérêt en fonction de l'application visée,
- si l'on souhaite dimensionner un dispositif de détection destiné à ne fonctionner que dans une seule configuration d'acquisition, on sélectionne :

   ♦ soit la configuration d'acquisition offrant le meilleur compromis sur toute la plage de fréquences spatiales d'intérêt ; cette configuration est par exemple celle fournissant la meilleure moyenne de valeurs d'indicateur de mérite, calculée sur l'ensemble de la plage de fréquences spatiales d'intérêt,
   ♦ soit la configuration d'acquisition fournissant les meilleures valeurs d'indicateur de mérite sur une partie essentielle de la plage de fréquences spatiales d'intérêt ; l'expression "partie essentielle" désigne ici une partie de la plage de fréquences spatiales d'intérêt correspondant aux fréquences spatiales les plus intéressantes de ladite plage eu égard à l'application visée,

- si l'on souhaite dimensionner un dispositif de détection destiné à fonctionner dans plusieurs configurations d'acquisition, on sélectionne au moins les deux configurations d'acquisition fournissant les meilleures valeurs d'indicateur de mérite respectivement sur deux parties essentielles de la plage de fréquences spatiales d'intérêt. Ainsi par exemple, on sélectionne avantageusement : la configuration d'acquisition fournissant les meilleures valeurs d'indicateur de mérite sur une partie supérieure de la plage de fréquences spatiales d'intérêt, c'est-à-dire aux hautes fréquences, et la configuration d'acquisition fournissant les meilleures valeurs d'indicateur de mérite sur une partie inférieure de la plage de fréquences spatiales d'intérêt, c'est-à-dire aux basses fréquences.

Le procédé de dimensionnement selon l'invention permet également de comparer plusieurs modèles structurels distincts, c'est-à-dire des modèles correspondant à des ensembles distincts de valeurs de paramètres structurels, afin de sélectionner le plus performant d'entre eux. A cette fin :

- on définit plusieurs modèles structurels différents,
- pour chaque modèle structurel, on définit une ou plusieurs configuration(s) d'acquisition dudit modèle structurel, dont l'une au moins correspond à une distance collimateur-détecteur supérieure au dixième de la hauteur septale du collimateur et à un degré de pixellisation dans le plan de détection supérieur à 1, étant précisé que l'on définit au moins deux configurations d'acquisition par modèle structurel si l'on souhaite dimensionner un dispositif de détection destiné à fonctionner dans plusieurs configurations d'acquisition,

- on calcule la valeur de l'indicateur de mérite pour chaque fréquence spatiale d'intérêt et pour chaque configuration d'acquisition précédemment définies, et on compare les valeurs d'indicateur de mérite obtenues,
- si l'on souhaite dimensionner un dispositif de détection destiné à ne fonctionner que dans une seule configuration d'acquisition, on sélectionne :

 ♦ soit la configuration d'acquisition offrant le meilleur compromis sur toute la plage de fréquences spatiales d'intérêt,
 ♦ soit la configuration d'acquisition fournissant les meilleures valeurs d'indicateur de mérite sur une partie essentielle de la plage de fréquences spatiales d'intérêt,

- si l'on souhaite dimensionner un dispositif de détection destiné à fonctionner dans plusieurs configurations d'acquisition, on sélectionne le modèle structurel et au moins deux des configurations d'acquisition dudit modèle structurel offrant le meilleur compromis respectivement sur deux parties essentielles de la plage de fréquences spatiales d'intérêt (par exemple aux hautes fréquences et aux basses fréquences).

Avantageusement, l'indicateur de mérite utilisé est choisi parmi : l'indicateur connu sous le nom de Detective Quantum Efficiency, que l'on peut traduire par Efficacité Quantique de Détection ; un rapport contraste à bruit ; etc.
La performance d'un dispositif de détection, pour chaque fréquence spatiale, peut en effet être mesurée par un indicateur de mérite appelé DQE (acronyme de Detective Quantum Efficiency). Comme l'enseigne la publication " The use of Detective Quantum Efficiency (DQE) in evaluating the performance of gamma-camera systems" (Starck et *al.*), cet indicateur initialement utilisé pour les dispositifs de détection de rayons X est aussi adapté aux gamma-caméras.
La DQE est un indicateur de mérite qui présente l'avantage d'intégrer à la fois les notions de sensibilité et de résolution spatiale. Elle traduit la capacité d'un système d'imagerie à utiliser efficacement les données d'entrée. Elle est donnée par l'équation :

$$DQE(u,v) = \frac{SNR(u,v)^2_{out}}{SNR(u,v)^2_{in}}$$

où u et v représentent les fréquences spatiales selon les directions X et Y respectivement, et $SNR_{in}$ et $SNR_{out}$ les rapports signal-sur-bruit à l'entrée et à la sortie du dispositif de détection. Le rapport signal-sur-bruit à l'entrée du dispositif de détection peut-être déterminé par le ratio du nombre de photons émis par la source à une énergie donnée, au cours d'une acquisition (activité de la source multipliée par le coefficient d'embranchement à l'énergie d'émission considérée et par la durée d'acquisition), sur la variance de ce dernier, la statistique d'émission de la source étant considérée comme étant Poissonnienne.
Le calcul d'une DQE peut être effectué comme suit :

- exposition du dispositif de détection à un rayonnement photonique ou simulation d'une telle exposition,
- mesure de l'intensité du signal détecté par tout ou partie des voxels du détecteur ou simulation de cette mesure d'intensité,
- constitution d'une représentation fréquentielle d'au moins une image d'intensité, ladite image d'intensité représentant l'intensité du signal mesuré ou simulé par une pluralité de voxels coplanaires selon un plan parallèle au plan de détection,
- attribution d'un indice de sensibilité à chaque représentation fréquentielle constituée, cet indice de sensibilité pouvant être l'intégrale des intensités des signaux de chaque voxel de ladite image divisée par la quantité de photons émis par la source.

Selon un premier mode de réalisation, le calcul de la DQE comprend ensuite les étapes suivantes :

- calcul de la somme d'une pluralité de représentations fréquentielles pondérées par l'inverse de leur indice de sensibilité respectif,
- représentation de la somme ainsi calculée sous la forme d'un histogramme, par exemple par une moyenne radiale.

En variante, selon un deuxième mode de réalisation, le calcul de la DQE comprend ensuite (après l'étape d'attribution d'un indice de sensibilité) les étapes suivantes :

- représentation de chaque représentation fréquentielle sous la forme d'un histogramme, par exemple par une moyenne radiale,

- calcul de la somme d'une pluralité d'histogrammes pondérés chacun par l'inverse de l'indice de sensibilité attribué à la représentation fréquentielle que représente ledit histogramme.

En d'autres termes, il est possible d'exécuter les deux dernières étapes du calcul de la DQE dans un sens (premier mode de réalisation) ou dans l'autre (deuxième mode de réalisation).

Tout autre indicateur de mérite connu de l'homme du métier peut être utilisé dans le cadre du procédé de dimensionnement selon l'invention, dès lors que cet indicateur est apte à représenter le rapport signal sur bruit et/ou la sensibilité et/ou la résolution spatiale du dispositif de détection sur la plage de fréquences spatiales d'intérêt initialement définie. De préférence, l'indicateur de mérite choisi est apte à représenter au moins la sensibilité du dispositif de détection sur une plage de fréquences spatiales comprises entre 0 et 3 cm$^{-1}$.

L'invention concerne également un procédé de reconstruction d'une image d'une source de rayonnements photoniques, ce procédé étant défini dans la revendication 14.

Dans une deuxième version de l'invention, le dispositif de détection est utilisé dans au moins deux configurations d'acquisition. Durant l'exposition, on réalise alors au moins deux opérations d'acquisition de données de rayonnement dans des configurations d'acquisition du dispositif de détection distinctes (chaque configuration d'acquisition étant déterminée par une distance collimateur-détecteur et un degré de pixellisation), au moins l'une desdites configurations d'acquisition correspondant à une distance collimateur-détecteur supérieure au dixième de la hauteur septale du collimateur et à un degré de pixellisation dans le plan de détection supérieur à 1, lesdites configurations d'acquisition étant préalablement sélectionnées au vu de résultats de calculs de valeurs d'un indicateur de mérite sur une plage de fréquences spatiales d'intérêt définie en fonction de l'application visée. Chaque opération d'acquisition fournit une projection unitaire (telle que précédemment définie). On combine ensuite plusieurs (toutes ou seulement certaines) des projections unitaires précédemment acquises, pour former une projection combinée (telle que précédemment définie). En mode planaire, on acquiert ainsi au moins deux projections unitaires (dans des configurations d'acquisition distinctes) pour l'unique angle de vue choisi. En mode tomographique, on peut acquérir une ou plusieurs projections unitaires par angle de vue, au moins deux parmi l'ensemble des projections acquises l'étant dans des configurations d'acquisition distinctes.

La combinaison des projections unitaires en projection combinée peut être effectuée de différentes façons : juxtaposition des projections unitaires et des matrices systèmes correspondant aux différentes opérations d'acquisition (comme expliqué plus loin) ; utilisation de transformées en ondelettes après reconstruction (en image) de chacune des projections unitaires individuellement ; implémentation d'un algorithme de reconstruction qui ne va sélectionner que les fréquences d'intérêt dans chacune des projections unitaires pendant une unique étape de reconstruction...

Avantageusement on utilise un dispositif de détection comprenant des moyens de réglage de la distance collimateur-détecteur, et les configurations d'acquisition préalablement sélectionnées correspondent à des distances collimateur-détecteur différentes.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :

- la figure 1 a est une vue schématique d'un canal et d'un pixel correspondant d'un dispositif de détection de l'art antérieur ;
- la figure 1b est une vue schématique d'un canal et d'un pixel correspondant d'un dispositif de détection de l'art antérieur, dans lequel les pixels sont divisés chacun en une pluralité de pixels virtuels ;
- la figure 2 est une vue schématique en coupe selon un plan (X, Z) d'une partie d'un mode de réalisation d'un dispositif de détection selon l'invention ;
- la figure 3 est une vue schématique en coupe selon un plan (X, Z) d'une partie d'un dispositif de détection dont le collimateur est accolé au détecteur, sur laquelle est représentée une interaction de photon avec le matériau semi-conducteur ;
- la figure 4 est une vue schématique en coupe selon un plan (X, Z) d'une partie d'un dispositif de détection dont le collimateur est écarté du détecteur, sur laquelle est représentée une interaction de photon avec le matériau semi-conducteur ;
- la figure 5 est une équation matricielle ;
- les figures 6 à 8 représentent des courbes de DQE en fonction de la fréquence spatiale.

La figure 2 illustre de façon très schématique un mode de réalisation d'un dispositif de détection selon l'invention. Seule une portion de ce dispositif est représentée, vue en coupe selon un plan (X, Z). Ce dispositif de détection 1 comprend un détecteur 2 semi-conducteur et un collimateur 3.

Le détecteur 2 comprend une matrice 2D de pixels coplanaires 5, 6, 7... Seuls trois de ces pixels sont représentés sur la figure 2. Ces pixels forment, en regard du collimateur 3, un plan frontal 4, dit plan de détection, s'étendant selon des directions X et Y. Le détecteur 2 illustré présente une section carrée dans tout plan parallèle au plan de détection.

Chaque pixel comprend un matériau semi-conducteur 8 de part et d'autre duquel sont formées une anode et une cathode (non représentées). Chaque pixel constitue ainsi un circuit unitaire de collecte de charges. Un tel pixel est qualifié de pixel physique.

Le détecteur 2 peut être formé par une pluralité de détecteurs élémentaires accolés, chaque détecteur élémentaire correspondant à un pixel et comprenant un bloc de matériau semi-conducteur, une anode et une cathode (qui lui sont propres). Un tel détecteur est parfois appelé détecteur planaire.

En variante, le détecteur 2 peut être monolithique, ce qui signifie qu'il comprend un seul et unique bloc de matériau semi-conducteur, formant le matériau semi-conducteur de tous les pixels physiques. L'anode formée sur une face de ce bloc de matériau semi-conducteur est segmentée de façon à former une pluralité d'anodes élémentaires indépendantes. La cathode formée sur la face opposée dudit bloc peut être continue ou segmentée. Un pixel physique est alors défini par une anode élémentaire, ainsi que par le volume de matériau semi-conducteur et la surface de cathode s'étendant en regard de cette anode élémentaire selon une direction Z orthogonale au plan de détection. Une telle segmentation de l'anode permet de réaliser des pixels physiques de taille inférieure à celle des pixels physiques des détecteurs planaires. La résolution spatiale intrinsèque d'un détecteur monolithique est donc généralement plus faible (c'est-à-dire meilleure) que celle des détecteurs planaires.

Le collimateur 3 comprend une pluralité de canaux, dont les trois canaux 9, 10 et 11 visibles sur la figure 2. Les canaux du collimateur 3 présentent tous la même dimension, dite hauteur, selon la direction Z. La hauteur septale h du collimateur 3, définie comme étant la dimension maximale du collimateur selon la direction Z, est donc égale à la hauteur de chaque canal 9-11. Un collimateur comportant des canaux de hauteurs différentes est toutefois conforme à l'invention.

Les canaux 9-11 sont assemblés autour d'un canal central, qui définit un axe central du collimateur. Le collimateur est agencé de façon à ce que son axe central soit orthogonal au plan de détection 4 ; cet axe central s'étend donc selon la direction Z. En outre, les extrémités inférieures des canaux sont coplanaires ; elles définissent un plan 13, dit plan intérieur du collimateur, qui est parallèle au plan de détection 4. En l'exemple illustré, les canaux du collimateur sont tous parallèles, ce qui confère au dispositif de détection un large champ de vue.

Les canaux du collimateur sont délimités par des septas 12. Ces septas sont constitués d'une matière dense apte à absorber des rayonnements gamma ou X, telle un métal ou un alliage métallique contenant un métal lourd, par exemple le tungstène ou le plomb. En l'exemple illustré, le collimateur 3 présente une épaisseur septale constante dans au moins un plan orthogonal à son axe central, ce qui signifie que l'épaisseur de ses septas est identique d'un septa à un autre dans ce plan. En l'occurrence, le collimateur 3 illustré présente une épaisseur septale constante dans tout plan orthogonal à son axe central.

En l'exemple illustré, tous les pixels physiques (et virtuels) du détecteur et tous les canaux du collimateur présentent des sections transversales carrées, et chaque canal du collimateur correspond à un pixel physique du détecteur, et réciproquement. En d'autres termes, le pas (largeur) des pixels physiques est égal au pas (largeur du trou + épaisseur septale) des canaux.

Selon l'invention, la distance collimateur-détecteur du dispositif de détection, repérée c sur la figure 2, est supérieure au dixième de la hauteur septale h du collimateur, au moins dans une configuration d'acquisition dudit dispositif de détection.

Dans une première forme de réalisation de l'invention, le dispositif de détection présente une distance collimateur-détecteur fixe. Cette distance est alors supérieure au dixième de la hauteur septale du collimateur, et de préférence inférieure à la hauteur septale du collimateur, dans toute configuration du dispositif de détection (que celui-ci soit destiné à fonctionner dans une ou plusieurs configurations d'acquisition).

Dans une deuxième forme de réalisation de l'invention, le dispositif de détection comprend des moyens 14 de réglage de sa distance collimateur-détecteur (schématiquement représentés sur la figure 2), permettant de faire varier cette dernière. Ces moyens peuvent comprendre par exemple un mécanisme adapté pour écarter le collimateur du détecteur (telle une vis traversant à la fois une bride de support du collimateur et une bride de support du détecteur) et des moyens de mesure de la distance collimateur-détecteur aux fins de contrôle de cette dernière. L'invention n'est pas limitée aux moyens de réglage précédemment décrits ni à des moyens de réglage mécaniques.

Un tel dispositif peut fonctionner selon un procédé utilisant plusieurs configurations d'acquisition correspondant à des distances collimateur-détecteur différentes. Selon l'invention, au moins l'une de ces configurations d'acquisition présente une distance collimateur-détecteur supérieure au dixième de la hauteur septale du collimateur.

Le dispositif de détection selon l'invention comporte de plus des moyens, dits moyens de localisation dans le plan de détection, aptes à déterminer, pour chaque interaction de photon dans le matériau semi-conducteur, une information relative à la localisation de ladite interaction selon les directions X et Y. Ces moyens de localisation dans le plan de détection comprennent les pixels physiques précédemment définis. En l'exemple illustré, ils comprennent de plus des moyens de calculs permettant de déterminer, pour chaque pixel physique et pour chaque interaction de photon dans ce pixel, une information relative à la localisation, selon les directions X et Y, de ladite interaction au sein dudit pixel, par exemple par localisation barycentrique. Ces moyens de calculs permettent ainsi de définir une partition, dans le plan de détection, de chaque pixel physique en une pluralité de pixels virtuels de dimensions transversales inférieures à celles des canaux du collimateur, et d'associer à chaque interaction de photon l'un desdits pixels virtuels. De tels moyens de calculs sont connus de l'homme du métier et ne sont pas représentés sur la figure 2.

En d'autres termes, en l'exemple illustré, les moyens de localisation dans le plan de détection sont aptes à définir une sur-pixellisation virtuelle dans le plan de détection.

Le dispositif de détection selon l'invention comporte de plus optionnellement des moyens, dits moyens de localisation dans l'épaisseur, aptes à déterminer, pour chaque interaction de photon dans le matériau semi-conducteur, une information relative à la localisation de ladite interaction selon la direction Z. Ces moyens de localisation dans l'épaisseur permettent ainsi de définir une partition dans l'épaisseur, c'est-à-dire selon la direction Z, du matériau semi-conducteur de chaque pixel en une pluralité de couches virtuelles, et d'associer à chaque interaction de photon l'une desdites couches virtuelles. Ces moyens de localisation dans l'épaisseur sont essentiellement des moyens de calculs, connus de l'homme du métier et non représentés sur la figure 2.

Le détecteur 2 s'apparente donc à une matrice 3D de voxels, un voxel étant formé par l'intersection d'un pixel virtuel et d'une couche virtuelle. Cette matrice comprend au total $K = Vx * Vy * Vz$ voxels, où $Vx$ désigne le nombre de rangées de voxels selon la direction X, $Vy$ désigne le nombre de rangées de voxels selon la direction Y, et $Vz$ désigne le nombre de couches virtuelles du matériau. On observera que $Vx * Vy = PV * P$, où P désigne le nombre de pixels physiques du détecteur et PV le nombre de pixels virtuels par pixel physique. Chaque voxel du détecteur est repéré $VD_k$ avec $1 \leq k \leq K$.

Avantageusement, le dispositif de détection selon l'invention comprend de plus des moyens de sélection de configurations d'acquisition, adaptés pour permettre à un praticien (ou opérateur) de sélectionner une ou plusieurs configurations d'acquisition, par exemple en fonction de l'application visée et/ou au vu d'images précédemment obtenues. Suite à l'examen d'une image correspondant à une zone du corps d'un patient, il peut en effet s'avérer utile d'acquérir de nouvelles images de cette zone en privilégiant certaines fréquences spatiales (c'est-à-dire en privilégiant certaines tailles d'objet). Les fréquences spatiales recherchées déterminent la ou les configurations d'acquisition à sélectionner.

L'invention concerne également un procédé de reconstruction d'une image d'une source de rayonnements photoniques à partir d'un dispositif de détection tel que précédemment décrit. En d'autres termes, l'invention concerne également un procédé de fonctionnement d'un tel dispositif de détection.

De façon usuelle, on expose le dispositif de détection à une source de rayonnements photoniques, tels que des rayonnements X et/ou gamma, selon au moins un angle de vue.

Selon une première version de l'invention, le dispositif de détection est utilisé, de façon usuelle, dans une seule configuration d'acquisition. L'originalité du procédé de reconstruction d'image selon l'invention réside alors dans les caractéristiques de cette configuration d'acquisition, qui combine un degré de pixellisation dans le plan de détection supérieur à 1 et une distance collimateur-détecteur supérieure au dixième de la hauteur septale du collimateur. Cette configuration d'acquisition est préalablement sélectionnée comme expliqué plus loin, de façon à obtenir une qualité d'image optimale.

Selon cette première version, durant l'exposition du dispositif de détection à la source de rayonnements photoniques, on réalise une (mode planaire) ou plusieurs (mode tomographique) opérations d'acquisition de données de rayonnement, tel qu'expliqué plus loin.

Selon une deuxième version de l'invention, le procédé de reconstruction utilise avantageusement au moins deux configurations d'acquisition. Selon cette deuxième version, durant l'exposition, on réalise au moins deux opérations d'acquisition dans des configurations d'acquisition du dispositif de détection distinctes, chaque configuration d'acquisition étant déterminée par une distance collimateur-détecteur et un degré de pixellisation. En mode planaire, on ne réalise de préférence que deux opérations d'acquisition, afin de limiter la durée totale d'exécution du procédé. Pour les mêmes raisons, en mode tomographique, on ne réalise de préférence qu'une ou deux opérations d'acquisition par angle de vue. Les configurations d'acquisition utilisées sont préalablement sélectionnées en fonction de l'application visée, qui détermine une plage de fréquences spatiales d'intérêt, à l'aide d'un indicateur de mérite fonction de la fréquence spatiale. La façon d'opérer cette sélection préalable est détaillée plus loin, dans le cadre du procédé de dimensionnement selon l'invention. On retiendra toutefois qu'au moins l'une des configurations d'acquisition sélectionnées présente une distance collimateur-détecteur supérieure au dixième de la hauteur septale du collimateur et un degré de pixellisation dans le plan de détection supérieur à 1 (son degré de pixellisation dans l'épaisseur peut en revanche être égal à 1, aucune sur-pixellisation dans l'épaisseur n'étant alors prévue).

La réalisation de chaque opération d'acquisition de données de rayonnement comprend les étapes suivantes.

Première étape : on calcule une matrice, dite matrice système Rj, correspondant à la configuration d'acquisition utilisée dans l'opération d'acquisition concernée, notée j (par exemple j = {1, 2} si l'on ne réalise que deux opérations d'acquisition au total).

Comme expliqué précédemment, le détecteur est virtuellement divisé en K voxels $VD_k$, avec $1 \leq k \leq K$ et $K = Vx * Vy * Vz$. De même, la source à imager est virtuellement divisée en I voxels $VS_i$, avec $1 \leq i \leq I$.

La matrice système Rj est constituée de termes $r_{j\text{-}ik}$ qui représentent la probabilité qu'un photon émis par le voxel $VS_i$ de la source soit détecté par le voxel $VD_k$ du détecteur. Le calcul de cette matrice système Rj peut-être réalisé à l'aide d'un code de transport de particules, par exemple un code de type Monte Carlo, par exemple MCNP, ou tout autre code développé à cet effet ou encore une modélisation analytique. Ce calcul peut être effectué avant, pendant ou après l'exposition du dispositif de détection à la source de rayonnements, mais il est de préférence effectué avant cette exposition.

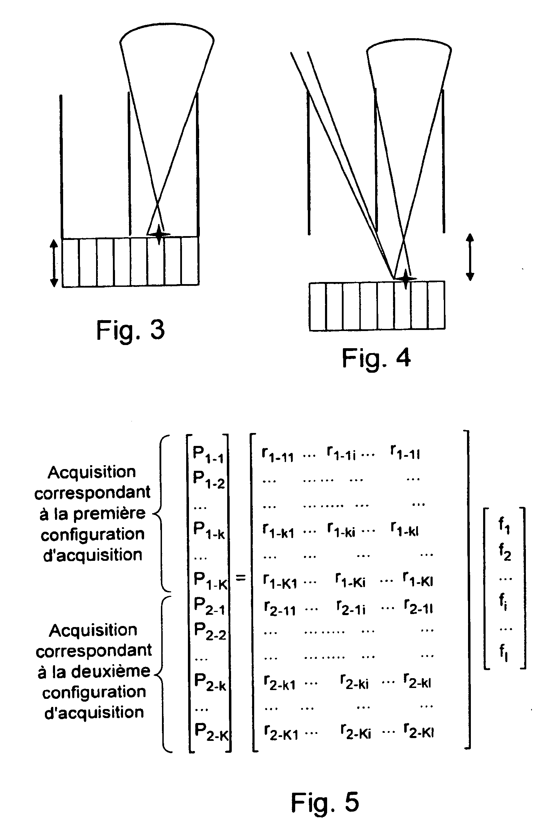

Comme on peut l'observer sur les figures 3 et 4, des distances collimateur-détecteur différentes conduisent à des échantillonnages différents de l'information et par conséquent à des matrices systèmes Rj différentes. En modifiant la distance collimateur-détecteur, on modifie en fréquence la localisation de l'information.

Deuxième étape : on détermine par mesure l'intensité du signal électrique produit dans tout ou partie des voxels du détecteur durant une période d'acquisition.

L'intensité mesurée dans chaque voxel du détecteur est représentée à l'aide d'un vecteur Pj où j désigne l'opération d'acquisition concernée. Ce vecteur Pj est qualifié de projection unitaire ; il est constitué de termes $p_{j\text{-}k}$ avec $1 \le k \le K$ et $K = Vx * Vy * Vz$ (nombre de voxels du détecteur).

Ces deux étapes sont effectuées pour chaque opération d'acquisition réalisée.

Si une seule opération d'acquisition est réalisée (première version de l'invention en mode planaire), on obtient une expression matricielle Pj = RjF.

Lorsque plusieurs opérations d'acquisition sont réalisées (première version en mode tomographique ou deuxième version de l'invention), on construit d'une part un vecteur P, dit projection combinée, regroupant les vecteurs Pj (projections unitaires), et d'autre part une matrice R regroupant les matrices Rj. On obtient alors l'expression matricielle P = RF illustrée à la figure 5. Sur cette figure, l'expression matricielle ne prend en compte que deux opérations d'acquisition (et donc deux projections unitaires) ; si d'autres opérations d'acquisition sont réalisées, les données correspondantes sont incorporées à la suite dans le vecteur P et la matrice R.

On a ainsi déterminé une projection combinée par combinaison d'une pluralité de projections unitaires qui, dans la deuxième version de l'invention, correspondent à différentes configurations d'acquisition. La combinaison opérée ici à consister à juxtaposer les données acquises (projections unitaires) et les matrices systèmes correspondant aux différentes opérations d'acquisition. D'autres méthodes de combinaison sont possibles.

Dans les expressions matricielles susmentionnées, le vecteur F, constitué de termes fi avec $1 \le i \le I$ (nombre de voxels de la source), représente l'intensité d'émission des voxels $VS_i$ de la source. Ce vecteur F permet donc de reconstruire une image de la source. Le calcul de ce vecteur F est par exemple obtenu par minimisation de l'expression $(P-RF)^2$, selon un procédé itératif connu de l'art antérieur (méthodes itératives algébriques de type ART ou SART, méthodes itératives statistiques de type MLEM, OSEM ou MAP, etc.).

Il est à noter que chaque opération d'acquisition permettrait à elle seule de reconstruire une image de la source de rayonnements photoniques. Dans la deuxième version de l'invention, l'utilisation d'au moins deux opérations d'acquisition (c'est-à-dire d'au moins deux projections unitaires) dans des configurations d'acquisition différentes, y compris en mode planaire, n'est pas proposée ici en vue de pallier un manque de données de rayonnement par acquisition. Cette utilisation est prévue dans le but d'améliorer la qualité de l'image reconstruite obtenue, grâce à une sélection adéquate des configurations d'acquisition. Cette sélection est opérée de façon à obtenir in fine à la fois une résolution spatiale très faible et une grande sensibilité.

L'invention concerne également un procédé de dimensionnement d'un dispositif de détection tel que précédemment décrit.

Selon ce procédé de dimensionnement, on définit tout d'abord au moins un modèle, dit modèle structurel, de dispositif de détection. Un tel modèle est déterminé par un ensemble de valeurs de paramètres de dimensionnement structurels relatifs au collimateur et au détecteur.

Pour le détecteur, les paramètres structurels à définir sont par exemple (certains des paramètres listés ci-après pouvant être redondants) : la nature du détecteur, et notamment la composition du matériau semi-conducteur; les dimensions du détecteur et notamment les dimensions du plan de détection et l'épaisseur du matériau semi-conducteur ; le nombre de pixels physiques ; la forme de la section transversale des pixels physiques (carrée, rectangulaire ou autre section polygonale, circulaire...) et ses dimensions (lorsque les pixels physiques sont de section carrée, il suffit alors de définir leur largeur, appelée pas), etc.

Pour le collimateur, les paramètres structurels à définir sont par exemple (certains des paramètres listés ci-après pouvant être redondants) : l'agencement relatif des canaux (canaux parallèles, divergents, convergents ou combinaison de tels agencements) ; la hauteur septale ; la hauteur de chaque canal ; l'épaisseur septale ; la forme de la section transversale des canaux (carrée, rectangulaire, hexagonale ou autre section polygonale, circulaire...) et ses dimensions (il s'agit ici des dimensions des trous), etc.

En l'exemple relaté ici, le modèle structurel défini selon l'invention est déterminé par l'ensemble de valeurs de paramètres suivant :

- matériau semi-conducteur : à base de CdZnTe ;
- épaisseur du matériau semi-conducteur : 5 mm ;
- dimensions du plan de détection : 224 mm * 224 mm ;
- section des pixels : carrée, de pas égal à 1,6 mm, le détecteur comportant par conséquent 140 * 140 pixels ;
- agencement des canaux du collimateur : parallèles ;
- hauteur septale : 16 mm ;
- épaisseur septale : 0,15 mm ;
- section des canaux : carrée, de largeur égale à 1,45 mm (largeur du trou). En d'autres termes, à chaque canal correspond un pixel et réciproquement (puisque 1,45 mm de largeur de trou du canal + 0,15 mm d'épaisseur septale = 1,6 mm correspondant au pas des pixels).

Selon l'invention, on définit ensuite au moins deux configurations d'acquisition. Comme précédemment expliqué, chaque configuration d'acquisition est déterminée par une distance collimateur-détecteur (notée c) et un degré de pixellisation. Dans le cas d'une sur-pixellisation virtuelle, la définition de ce degré de pixellisation revient à attribuer des valeurs aux paramètres suivants :

- le nombre de rangées de pixels virtuels par pixel physique selon la direction X, et le nombre de rangées de pixels virtuels par pixel physique selon la direction Y ;
- en variante ou en combinaison, le nombre PV de pixels virtuels par pixel physique ;
- en variante ou en combinaison, le pas des pixels virtuels ;
- optionnellement, le nombre Vz de couches virtuelles du matériau semi-conducteur. De façon générale, Vz est de préférence choisi compris entre 1 et 10.

Selon l'invention, au moins l'une des configurations d'acquisition ainsi définie doit présenter une distance collimateur-détecteur supérieure au 1/10$^{ème}$ de la hauteur septale du collimateur et un degré de pixellisation dans le plan de détection supérieur à 1. Dans le modèle structurel défini ici, chaque pixel physique correspondant à un canal du collimateur, le degré de pixellisation dans le plan de détection est égal au nombre PV de pixels virtuels par pixel physique.

En l'exemple illustré, cinq configurations d'acquisition sont définies, déterminées par les distances collimateur-détecteur 1 mm, 5 mm et 10 mm, et par les degrés de pixellisation correspondant à PV = 4, 16 et 64 (trois degrés de sur-pixellisation dans le plan de détection sont ainsi étudiés) et à Vz = 3 (un seul degré de pixellisation dans l'épaisseur est étudié). Ces configurations d'acquisition sont résumées dans le tableau 1 ci-après.

Tableau 1

| Nom du modèle | Hauteur septale | Pas des pixels virtuels | Nombre de pixels virtuels par pixel (PV) | Distance collimateur-détecteur | Nombre (Vz) de couches virtuelles |
|---|---|---|---|---|---|
| H16_3DOI_pix4_c1 | 16 mm | 0,8 mm | 4 (soit 2x2) | 1 mm | 3 |
| H16_3DOI)_pix16_c1 | 16 mm | 0,4 mm | 16 (soit 4x4) | 1 mm | 3 |
| H16_3DOI_pix64_c1 | 16 mm | 0,2 mm | 64 (soit 8x8) | 1 mm | 3 |
| H16_3DOI_pix64_c5 | 16 mm | 0,2 mm | 64 (soit 8x8) | 5 mm | 3 |
| H16_3DOI_pix64_c10 | 16 mm | 0,2 mm | 64 (soit 8x8) | 10 mm | 3 |

Comme indiqué précédemment, toutes ces configurations d'acquisition correspondent à un même modèle structurel et présentent donc la même hauteur septale. Par ailleurs, elles comportent le même nombre de couches virtuelles Vz. Ces deux paramètres sont toutefois indiqués dans le tableau 1 ci-dessus car ils distinguent les configurations qui y sont rapportées des modèles décrits dans le tableau 2 ci-après, qualifiés de modèles témoins.

On notera également que, dans la mesure où un seul modèle structurel de dispositif de détection a été défini dans le cadre de cet exemple, toutes les configurations d'acquisition du tableau 1 présentent le même pas de pixel physique. Dès lors, les paramètres "pas des pixels virtuels" et "nombre de pixels virtuels par pixel" traduisent la même caractéristique géométrique.

Selon l'invention, on calcule ensuite la DQE de chacune des configurations d'acquisition ainsi définies, sur une plage de fréquences spatiales d'intérêt. Ce calcul est réalisé en supposant, en première approximation, que le bruit est stationnaire et qu'il est distribué de façon Poissonnienne. La plage de fréquences spatiales d'intérêt choisie ici est la plage [0 ; 3 cm$^{-1}$], adaptée à la mammographie.

Pour chaque configuration d'acquisition, le calcul de la DQE comprend les étapes suivantes.

Première étape : on simule l'exposition de la configuration d'acquisition à une source ponctuelle, par exemple centrée par rapport au collimateur et située à une distance prédéterminée de ce dernier (notée distance source-collimateur), durant une durée d'exposition donnée.

Le choix de la distance source-collimateur est dicté par l'application visée. Pour une application de type mammographie, cette distance est de préférence comprise entre 1 cm et 5 cm. Elle est plutôt de l'ordre de 10 cm en imagerie cardiaque. En l'exemple illustré, la distance source-collimateur simulée est de 5 cm. Cette distance correspond en effet à l'épaisseur moyenne d'un sein et est en outre la plus critique. Il est également possible de simuler plusieurs expositions, à différentes distances source-collimateur.

La simulation de l'exposition de la configuration d'acquisition à une source ponctuelle est réalisée par un code de transport de particules, par exemple un code de type connu sous le nom Monte Carlo, par exemple le code MCNP ou le code Gate. Ce code permet de simuler la position des interactions dans l'ensemble des voxels du détecteur. D'autres types de codes peuvent être utilisés, tels que des codes déterministes, par exemple le code connu sous le nom Sindbad (voir la publication "Combination of high resolution analytically computed uncollided flux images with low resolution Monte-Carlo computed scattered flux images" de J. Tabary, R. Guillemaud and F. Mathy, IEEE Trans. Nucl. Sci. 51-1 212-217, 2004).

De préférence, la source ponctuelle simulée est un isotope utilisé en médecine nucléaire, par exemple $^{99m}$Tc (source émettant des photons monoénergétiques d'énergie 140 keV). En l'exemple illustré, on simule une source ayant une activité de 740 MBq, la durée d'exposition étant de 10 minutes.

Deuxième étape : on obtient, pour chaque couche virtuelle z du matériau détecteur, PV images $I_{z,n}$, chaque image $I_{z,n}$ représentant l'intensité (niveau de gris) du signal électrique détecté dans les voxels du détecteur repérés VD-z-n, avec $1 \leq z \leq Vz$ et $1 \leq n \leq PV$. Lesdits voxels VD-z-n correspondent à l'intersection de la couche z et d'un pixel virtuel d'indice n. L'indice n définit la position relative de pixels faisant face au même canal. En d'autres termes, l'indice n définit la position de chaque pixel virtuel (ou physique en cas de sur-pixellisation physique) relativement au canal qui lui fait face. Le détecteur compte autant de pixels virtuels d'indice n, et donc de voxels VD-z-n, que de pixels physiques. De préférence, l'indexation est réalisée de façon identique pour tous les groupes de pixels (chaque groupe correspondant à un canal). Autrement dit, tous les pixels ayant la même position relative par rapport au canal qui leur fait face sont repérés par la même valeur d'indice.

Troisième étape : on détermine une représentation fréquentielle de chaque image $I_{z,n}$, par exemple en réalisant la transformée de Fourier de chaque image $I_{z,n}$, que l'on note TF $I_{z,n}$. On obtient ainsi Vz x PV transformées de Fourier TF $I_{z,n}$, avec $1 \leq z \leq Vz$ et $1 \leq n \leq PV$.

Chaque image TF $I_{z,n}$ est une matrice de fréquences, dont chaque terme (u,v) représente l'intensité du signal correspondant aux fréquences spatiales u (selon la direction X) et v (selon la direction Y) de l'image $I_{z,n}$.

Quatrième étape : on effectue une somme pondérée du carré du module de chaque représentation fréquentielle TF $I_{z,n}$ obtenue à l'étape précédente.

Le facteur de pondération de chaque représentation fréquentielle est égal à 1 / $S_{z,n}$, où $S_{z,n}$ est égal au nombre d'interactions totales estimées dans les voxels d'indice n de la couche z (voxels VD-z-n), divisé par le nombre de photons émis par la source. Le coefficient $S_{z,n}$ peut être appelé sensibilité des voxels d'indice n de la couche z. Il correspond à un indice de sensibilité associé à la représentation fréquentielle TF $I_{z,n}$.

On obtient alors la représentation fréquentielle (ou image fréquentielle) 2D suivante :

$$DQEimage = \sum_{z=1}^{Vz} \sum_{n=1}^{PV} \frac{1}{S_{z,n}} \times \left| TF\ I_{z,n} \right|^2$$

Cinquième étape: on détermine la DQE de la configuration d'acquisition en construisant un histogramme en fréquence de la représentation fréquentielle *DQEimage* obtenue à l'étape précédente, cette grandeur étant alors préférentiellement divisée par le nombre de photons émis par la source, à l'énergie considérée, durant la simulation (ou acquisition).

Cet histogramme est obtenu à partir de la matrice *DQEimage* en sommant les intensités de chaque terme (u,v) correspondant à une même fréquence spatiale indépendamment des axes. Pour toute fréquence spatiale $f = \sqrt{u^2 + v^2}$, la valeur de l'histogramme est la somme des intensités des éléments (u,v) de *DQEimage* dont les coordonnées (u,v) sont telles $\sqrt{u^2+v^2}=f$. On peut, de préférence, normer cette somme d'intensités par le nombre de points de coordonnées (u,v) tels que $\sqrt{u^2+v^2}=f$. L'histogramme correspond alors à la moyenne radiale de la représentation fréquentielle 2D *DQEimage.*

L'histogramme obtenu, appelé DQE, est représentatif de la sensibilité et de la résolution spatiale du dispositif de détection, en fonction de la fréquence spatiale.

Les quatrième et cinquième étapes peuvent être inversées. On établit dans ce cas un histogramme du carré du module de chaque représentation fréquentielle TF $I_{z,n}$ en effectuant une moyenne radiale, puis on effectue une somme des Vz * PV histogrammes ainsi obtenus pondérée par les facteurs de pondération $1/S_{z,n}$ précédemment définis.

Aux fins de vérification de l'effet technique sur lequel s'appuie le concept inventif commun au dispositif de détection, procédé de dimensionnement et procédé de reconstruction d'image selon l'invention, l'inventrice a également simulé des modèles témoins, tels que décrits dans le tableau 2 ci-dessous. Tous les paramètres structurels de dimensionnement de ces modèles témoins qui n'apparaissent pas dans le tableau 2 sont identiques à ceux des configurations d'acquisition du tableau 1.

Tableau 2

| Nom du modèle | Hauteur septale | Pas des pixels virtuels | Nombre de pixels virtuels par pixel (PV) | Distance collimateur -détecteur | Nombre de couches virtuelles |
|---|---|---|---|---|---|
| Ref_LEHR | 29 mm | 1,6 mm | 1 | 1 | 1 |
| H16_1DOI_c1 | 16 mm | 1,6 mm | 1 | 1 mm | 1 |
| H16_1DOI_c10 | 16 mm | 1,6 mm | 1 | 10 mm | 1 |

La DQE de chacun de ces modèles témoins a été calculée sur la plage de fréquences spatiales [0 ; 3 cm$^{-1}$], comme indiqué précédemment pour les configurations d'acquisition du tableau 1.

On notera que le modèle nommé Ref_LEHR dispose d'un collimateur classique ayant une hauteur septale égale à 29 mm et par conséquent une bonne résolution spatiale (LEHR étant l'acronyme de Low-Energy High-Resolution). Ce modèle témoin Ref_LEHR est qualifié de modèle de référence : l'invention vise à fournir des dispositifs de détection surpassant celui-ci. Les configurations d'acquisition définies dans le tableau 1 présentent une plus faible hauteur septale que ce modèle de référence. On s'attend donc à ce qu'elles offrent un gain en sensibilité, ce qui est confirmé par les essais. On s'attend également à ce que ces configurations d'acquisition conduisent à une dégradation de la résolution, se traduisant par une DQE plus faible notamment aux hautes fréquences. Contre toute attente, cette dégradation ne se produit pas, comme démontré ci-après.

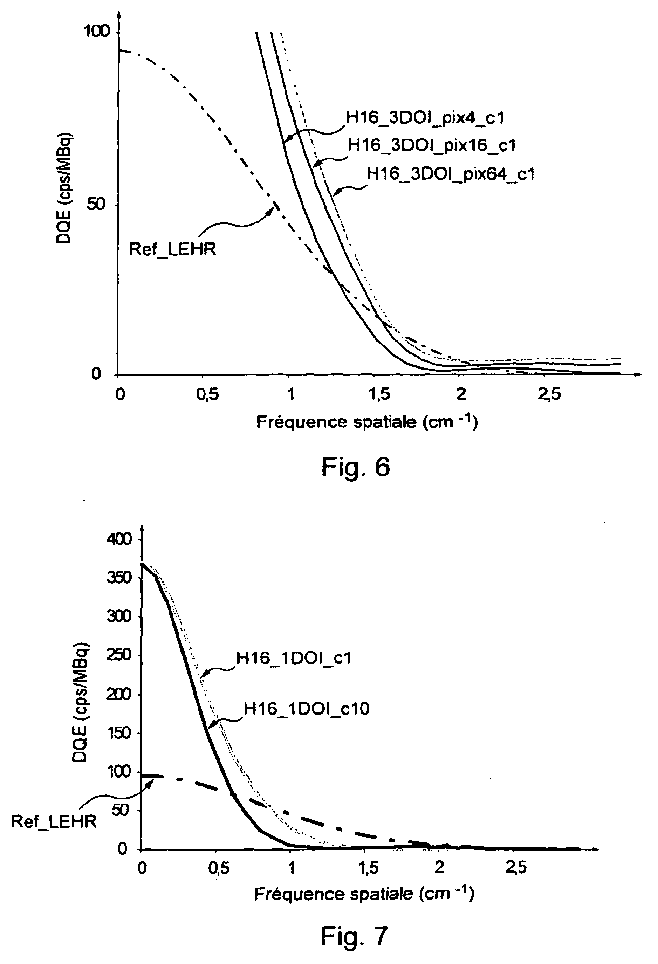

Les DQE calculées pour les configurations d'acquisition (tableau 1) définies dans le cadre du procédé de dimensionnement selon l'invention et pour les modèles témoins (tableau 2) sont représentées sur les figures 6 à 8. La DQE à fréquence nulle (valeur de la DQE pour f=0) représente la sensibilité du dispositif de détection. Aux autres fréquences, la DQE doit être la plus élevée possible pour que la qualité des images reconstruites à cette fréquence soit la meilleure possible.

Sur la figure 6 sont reportées les DQE des configurations d'acquisition H16_3DOI_pix4_c1, H16_3DOI_pix16_c1, H16_3DOI_pix64_c1 et du modèle de référence (Ref_LEHR). La comparaison de ces courbes permet d'analyser l'effet de la sur-pixellisation sur la qualité de l'image reconstruite (le degré de pixellisation dans le plan de détection étant le seul paramètre dont les valeurs diffèrent entre les trois premières configurations), et de comparer les résultats obtenus à ceux du modèle de référence. On observe que la DQE augmente avec le degré de pixellisation sur toute la plage de fréquences spatiales d'intérêt. La sur-pixellisation permet de plus d'offrir un dispositif de détection plus performant que le modèle de référence aux hautes fréquences (notamment supérieures à 2,2 cm$^{-1}$). En outre, plus le degré de pixellisation est élevé, plus la zone de fréquences spatiales où la DQE du modèle avec sur-pixellisation est inférieure à celle du modèle de référence est réduite. Avec un collimateur de hauteur septale 16 m, on obtient une sensibilité (DQE à fréquence nulle) meilleure (d'un facteur 4) qu'avec le collimateur de référence de hauteur 29 mm, ce qui était attendu. Mais de surcroît, grâce à la sur-pixellisation dans le plan de détection (quel que soit son degré), on obtient aussi un gain en résolution par rapport au modèle de référence. On est ainsi parvenu à des dispositifs de détection plus sensible et plus résolu que le modèle de référence.

Sur la figure 7 sont reportées les DQE des modèles témoins H16_1DOI_c1, H16_1DOI_c10 et du modèle de référence (Ref_LEHR). Comme on peut le constater à la lecture du tableau 2, pour ces trois modèles témoins, aucune sur-pixellisation, ni dans le plan de détection, ni dans l'épaisseur, n'est effectuée. En d'autres termes : la partition minimale du plan de détection de ces trois modèles témoins correspond au pas des pixels physiques des configurations d'acquisition du tableau 1, qui est égal à 1,6 mm ; l'information concernant la profondeur de chaque interaction de photon n'est pas prise en compte dans ces modèles, ce qui revient à dire que le matériau détecteur ne comporte qu'une seule couche (virtuelle et physique), alors que les configurations du tableau 1 en comportent trois. La comparaison des courbes de DQE de ces trois modèles témoins permet donc d'analyser l'effet, en l'absence de sur-pixellisation, du décalage entre le collimateur et le plan de détection sur la qualité de l'image reconstruite (la distance collimateur-détecteur étant le seul paramètre dont les valeurs diffèrent entre les deux premiers modèles), et de comparer les résultats obtenus à ceux du modèle de référence. On constate que la DQE du modèle H16_1DOI_c1 (modèle avec un faible décalage) est supérieure à celle du modèle H16_1DOI_c10 (modèle avec un plus grand décalage), et ce sur l'ensemble de la plage de fréquences spatiales considérée. En l'absence de sur-pixellisation dans le plan de détection, il n'y a donc aucun bénéfice à augmenter la distance collimateur-détecteur. Ces résultats sont conformes à ceux attendus par l'homme du métier. Ils expliquent qu'à ce jour personne n'avait imaginé pouvoir améliorer les performances d'un dispositif de détection en écartant le collimateur du plan de détection de plus du 1/10ème de la hauteur septale du collimateur.

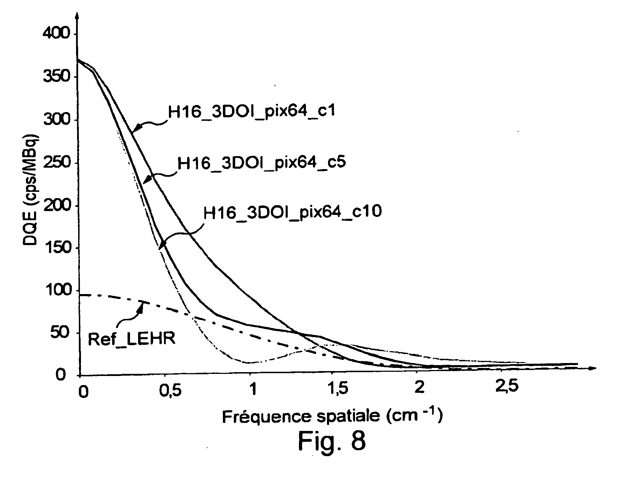

Sur la figure 8 sont reportées la DQE du modèle de référence et les DQE des configurations d'acquisition H16_3DOI_pix64_c1, H16_3DOI_pix64_c5 et H16_3DOI_pix64_c10 définies dans le cadre du procédé de dimensionnement selon l'invention. La comparaison de ces courbes permet d'analyser l'effet, en cas de sur-pixellisation (à un degré élevé), du décalage entre le collimateur et le plan de détection sur la qualité de l'image reconstruite (la distance collimateur-détecteur étant le seul paramètre dont les valeurs diffèrent entre les trois configurations d'acquisition considérées), et de comparer les résultats obtenus à ceux du modèle de référence. On observe qu'une distance collimateur-détecteur égale à 5 mm (cf. H16_3DOI_pix64_c5) permet d'être au-dessus de la courbe du modèle de référence sur l'ensemble de la plage de fréquences spatiales. Elle permet de plus de supprimer le creux observé dans les courbes de DQE des modèles dont la distance collimateur-détecteur est plus élevée (cf. H16_3DOI_pix64_c10). Enfin, cette distance de 5 mm permet d'offrir une qualité d'image reconstruite supérieure à celle obtenue avec 1 mm de décalage (cf. H16_3DOI_pix64_c1) pour des fréquences supérieures à 1,3 cm$^{-1}$. Cependant, pour des fréquences spatiales inférieures à 1,3 cm$^{-1}$, le modèle le plus performant est celui dont la distance collimateur-détecteur est égale à 1 mm (H16_3DOI_pix64_c1). Inversement, au-delà de 1,6 cm$^{-1}$, le modèle offrant la meilleure qualité d'image est celui dont la distance collimateur-détecteur est égale à 10 mm (H16_3DOI_pix64_c10).

On peut déduire de ces observations que la combinaison d'une sur-pixellisation et d'un décalage entre le collimateur et le plan de détection permet d'utiliser un collimateur de plus faible hauteur septale, et donc de plus grande efficacité, sans dégradation de la résolution spatiale. De façon inattendue, une très nette amélioration de cette résolution est même obtenue aux hautes fréquences.

On comprend également, à l'examen de la figure 8, qu'un ajustement de la distance collimateur-détecteur permet d'adapter la sensibilité du dispositif de détection aux fréquences spatiales que l'on souhaite viser.

Dans le cadre du procédé de dimensionnement selon l'invention, les DQE de toutes les configurations d'acquisition préalablement définies sont comparées.

Deux options sont alors possibles, selon que l'on souhaite réaliser un dispositif de détection fonctionnant dans une ou plusieurs configurations d'acquisition.

Si l'on souhaite réaliser un dispositif de détection destiné à fonctionner dans une seule configuration d'acquisition, on sélectionne :

- soit la configuration d'acquisition offrant le meilleur compromis en matière de qualité d'image reconstruite (telle que représentée par la DQE) sur toute la plage de fréquences spatiales d'intérêt ; par exemple, on sélectionne la configuration d'acquisition présentant la moyenne de DQE (sur toute la plage) la plus élevée ;
- soit la configuration d'acquisition offrant la DQE la plus élevée sur une partie essentielle de la plage de fréquences spatiales d'intérêt. En mammographie, on privilégiera alors la partie supérieure (hautes fréquences) de la plage.

En l'exemple illustré, on sélectionne avantageusement la configuration H16_3DOI_pix64_c5, qui offre le meilleur compromis sur toute la plage de fréquences spatiales d'intérêt tout en garantissant, aux hautes fréquences, une bonne qualité d'image, proche de la configuration H16_3DOI_pix64_c10 et en tout état de cause supérieure au modèle de référence.

Si l'on souhaite réaliser un dispositif de détection fonctionnant dans au moins deux configurations d'acquisition, on sélectionne au moins de préférence :

- la configuration d'acquisition offrant la DQE la plus élevée aux hautes fréquences,
- la configuration d'acquisition offrant la DQE la plus élevée aux basses fréquences.

Une telle sélection permet de disposer d'un dispositif de détection apte à réaliser des images à la fois précises et contrastées.

Au vu des essais menés par l'inventrice, ces deux configurations correspondent généralement à des distances collimateur-détecteur différentes. Le dispositif de détection ainsi dimensionné doit donc être doté de moyens de réglage de la distance collimateur-détecteur. Il n'est cependant pas totalement exclu, selon le modèle structurel considéré, que ces configurations d'acquisition puissent correspondre à des distances collimateur-détecteur identiques mais à des degrés de sur-pixellisation différents. Le dispositif de détection présenterait dans ce cas une distance collimateur-détecteur fixe (supérieure au dixième de la hauteur septale du collimateur) et pourrait donc être dépourvu de moyens de réglage de cette distance, mais fonctionnerait par exemple avec deux acquisitions par angle de vue traitées avec des degrés de pixellisation différents.

Dans l'exemple illustré, les deux configurations d'acquisition à sélectionner correspondent respectivement aux configurations H16_3DOI_pix64_c10 et H16_3DOI_pix64_c1, qui présentent des distances collimateur-détecteur différentes (et des degrés de pixellisation identiques). La configuration H16_3DOI_pix64_c10, dont la distance collimateur-détecteur est égale à 10 mm, permet d'obtenir la meilleure qualité d'image pour les fréquences spatiales supérieures à 1,6 cm$^{-1}$. La configuration H16_3DOI_pix64_c1, dont la distance collimateur-détecteur est égale à 1 mm, permet d'obtenir la meilleure qualité d'image pour les fréquences spatiales inférieures à 1,3 cm$^{-1}$. Ces deux configurations offrent de surcroît une très bonne qualité d'image (supérieure à celle du modèle de référence) pour les fréquences comprises entre 1,3 cm$^{-1}$ et 1,6 cm$^{-1}$.

Dans le cadre du procédé de dimensionnement selon l'invention, il est par ailleurs possible de définir préalablement plusieurs modèles structurels différents.

Pour chaque modèle structurel, on définit ensuite au moins une configuration d'acquisition présentant une distance collimateur-détecteur supérieure au 1/10$^{ème}$ de la hauteur septale du collimateur et un degré de pixellisation dans le plan de détection supérieur à 1. De préférence, on définit pour chaque modèle structurel au moins deux configurations d'acquisition présentant des distances collimateur-détecteur différentes (dont une supérieure au dixième de la hauteur septale du collimateur).

On calcule alors la DQE de chaque configuration d'acquisition ainsi définie (pour chaque modèle structurel), puis on compare les DQE calculées.

Si l'on souhaite réaliser un dispositif de détection destiné à fonctionner dans une seule configuration d'acquisition, la suite du procédé est identique à celui mis en oeuvre lorsqu'un seul modèle structurel est initialement défini. On sélectionne, soit la configuration d'acquisition offrant le meilleur compromis sur toute la plage de fréquences spatiales d'intérêt, soit la configuration d'acquisition offrant la DQE la plus élevée sur une partie essentielle de la plage de fréquences spatiales d'intérêt. Ce faisant, on a également sélectionné un modèle structurel.

Si l'on souhaite réaliser un dispositif de détection fonctionnant dans au moins deux configurations d'acquisition, on sélectionne au moins les configurations d'acquisition offrant respectivement les DQE les plus élevées aux hautes fréquences et aux basses fréquences, sous réserve que ces configurations d'acquisition correspondent au même modèle structurel. Dans le cas contraire, on sélectionne avantageusement le modèle structurel et au moins deux des configurations d'acquisition dudit modèle offrant le meilleur compromis respectivement aux hautes fréquences et aux basses fréquences.

L'invention peut faire l'objet de nombreuses variantes par rapport aux modes de réalisation illustrés, dès lors que ces variantes entrent dans le cadre délimité par les revendications.

En particulier, le matériau détecteur peut être un matériau scintillateur. A noter, dans ce cas, que le dispositif de détection est dépourvu de moyens de localisation dans l'épaisseur (Vz est alors égal à 1).

Par ailleurs, en mode tomographique, il est possible d'utiliser deux (ou davantage) dispositifs de détection selon l'invention présentant des configurations d'acquisition distinctes et notamment des distances collimateur-détecteur différentes, de ne procéder qu'à une seule opération d'acquisition par angle de vue pour chaque dispositif de détection, puis de combiner les projections unitaires acquises par les deux dispositifs de détection. On réduit ainsi le temps total d'acquisition.

**Revendications**

1. Dispositif de détection de rayonnements photoniques, comprenant :

    - un collimateur (3) comprenant une pluralité de canaux (9, 10, 11),
    - un détecteur (2) comprenant un matériau détecteur et présentant, du côté du collimateur, un plan frontal (4) dit plan de détection,
    - des moyens de détermination d'une information relative à la localisation, selon des directions X et Y parallèles au plan de détection, d'une interaction de photon avec le matériau détecteur, ces moyens, dits moyens de localisation dans le plan de détection, permettant d'une part de définir une partition du plan de détection en pixels physiques ou virtuels de dimensions transversales inférieures à celles des canaux du collimateur, et d'autre part d'associer l'un desdits pixels à chaque interaction de photon,

le dispositif présentant en plus, au moins dans une configuration d'acquisition préalablement sélectionnée, un degré de pixellisation dans le plan de détection supérieur à 1 ainsi qu'une distance (c) entre le collimateur et le plan de détection, dite distance collimateur-détecteur, supérieure au dixième d'une hauteur septale (h) du collimateur, laquelle hauteur septale est définie comme étant la dimension maximale du collimateur selon une direction orthogonale au plan de détection.

**2.** Dispositif de détection selon la revendication 1, **caractérisé en ce que** les moyens de localisation dans le plan de détection sont aptes à définir une sur-pixellisation virtuelle dans le plan de détection.

**3.** Dispositif de détection selon l'une des revendications 1 ou 2, **caractérisé en ce qu'**il comprend des moyens (14) de réglage de la distance collimateur-détecteur.

**4.** Dispositif de détection selon l'une des revendications 1 à 3, **caractérisé en ce qu'**il comprend des moyens de reconstruction d'image aptes à déterminer un ensemble de données de rayonnement, dit projection combinée, permettant la reconstruction d'une image de la source de rayonnements photoniques, à partir d'une pluralité d'ensembles de données de rayonnement, dits projections unitaires, chaque projection unitaire résultant d'une opération d'acquisition de données de rayonnement par exposition du dispositif de détection à la source de rayonnements photoniques.

**5.** Dispositif de détection selon l'une des revendications 1 à 4, **caractérisé en ce que** la distance collimateur-détecteur (c) est Inférieure à la hauteur septale du collimateur dans toute configuration d'acquisition.

**6.** Dispositif de détection selon l'une des revendications 1 à 5, **caractérisé en ce que** le collimateur (3) présente un axe central et une épaisseur septale constante dans au moins un plan orthogonal à son axe central.

**7.** Dispositif de détection selon l'une des revendications 1 à 6, **caractérisé en ce que** les canaux (9, 10, 11) du collimateur sont parallèles, et **en ce que** chaque canal (9) du collimateur correspond à un unique pixel physique (5) du détecteur et réciproquement.

**8.** Dispositif de détection selon l'une des revendications 1 à 7, **caractérisé en ce que** le matériau détecteur est un matériau semi-conducteur,

**9.** Dispositif de détection selon la revendication 8, **caractérisé en ce qu'**il comprend des moyens de détermination d'une information relative à la profondeur d'une interaction de photon dans le matériau détecteur, ces moyens, dits moyens de localisation dans épaisseur, permettant de définir une partition de l'épaisseur du matériau détecteur en une pluralité de couches virtuelles et d'associer l'une desdits couches à chaque interaction de photon.

**10.** Dispositif de détection selon la revendication 9, destiné à être utilisé dans des applications de type mammographie, **caractérisé en ce que** :

- le collimateur présente une hauteur septale comprise entre 10 mm et 20 mm ;
- les moyens de localisation dans le plan de détection sont aptes à définir des pixels virtuels ayant un pas compris entre 0,1 mm et 0,4 mm ;
- les moyens de localisation dans l'épaisseur sont aptes à définir une partition du matériau semi-conducteur en au moins trois couches virtuelles,
- la distance collimateur-détecteur est comprise entre le quart et la moitié de la hauteur septale du collimateur, au moins dans une configuration d'acquisition préalablement sélectionnée.

**11.** Procédé de dimensionnement d'un dispositif de détection de rayonnements photoniques, le dispositif de détection comprenant :

- un collimateur (3) comprenant une pluralité de canaux (9, 10, 11),
- un détecteur (2) comprenant un matériau détecteur et présentant, du côté du collimateur, un plan frontal (4) dit plan de détection,
- des moyens de détermination d'une information relative à la localisation, selon des directions X et Y parallèles au plan de détection, d'une interaction de photon avec le matériau détecteur, ces moyens, dits moyens de localisation dans le plan de détection, permettant d'une part de définir une partition du plan de détection en pixels physiques ou virtuels de dimensions transversales inférieures à celles des canaux du collimateur, et d'autre part d'associer l'un desdits pixels à chaque interaction de photon,

procédé dans lequel ;

- on définit au moins une fréquence spatiale d'intérêt en fonction de l'application visée,
- on définit un modèle structurel de dispositif de détection, déterminé par un ensemble de valeurs de paramètres structurels de dimensionnement du collimateur et du détecteur,
- on définit au moins deux configurations d'acquisition dudit modèle structurel, chaque configuration d'acquisition étant déterminée par une distance collimateur-détecteur et un degré de pixellisation, au moins l'une desdites configurations d'acquisition correspondant à une distance collimateur-détecteur supérieure au dixième de la hauteur septale du collimateur et à un degré de pixellisation dans le plan de détection supérieur à 1,
- on utilise un indicateur de mérite permettant de représenter le rapport signal sur bruit et/ou la sensibilité et/ou la résolution spatiale du dispositif de détection en fonction de la fréquence spatiale,
- on calcule la valeur de cet indicateur de mérite pour chaque fréquence spatiale d'intérêt et pour chaque configuration d'acquisition préalablement définies,
- on compare les valeurs d'indicateur de mérite obtenues, et on sélectionne au moins l'une des configurations d'acquisition au vu des résultats de cette comparaison.

**12.** Procédé de dimensionnement selon la revendication 11, **caractérisé en ce que** :

- on définit une plage de fréquences spatiales d'intérêt en fonction de l'application visée,
- si l'on souhaite dimensionner un dispositif de détection destiné à ne fonctionner que dans une seule configuration d'acquisition, on sélectionne :

    ♦ soit la configuration d'acquisition offrant le meilleur compromis sur toute la plage de fréquences spatiales d'intérêt,
    ♦ soit la configuration d'acquisition fournissant les meilleures valeurs d'indicateur de mérite sur une partie essentielle de la plage de fréquences spatiales d'intérêt,

- si l'on souhaite dimensionner un dispositif de détection destiné à fonctionner dans plusieurs configurations d'acquisition, on sélectionne au moins les deux configurations d'acquisition fournissant les meilleures valeurs d'indicateur de mérite respectivement sur deux parties essentielles de la plage de fréquences spatiales d'intérêt.

**13.** Procédé de dimensionnement selon la revendication 12, **caractérisé en ce qu'**on sélectionne la configuration d'acquisition fournissant les meilleures valeurs d'indicateur de mérite sur une partie supérieure de la plage de fréquences spatiales d'intérêt, et la configuration d'acquisition fournissant les meilleures valeurs d'indicateur de mérite sur une partie inférieure de la plage de fréquences spatiales d'intérêt.

**14.** Procédé de dimensionnement selon l'une des revendications 11 à 13, **caractérisé en ce que** :

- on définit plusieurs modèles structurels différents,
- pour chaque modèle structurel, on définit une ou plusieurs configuration(s) d'acquisition dont l'une au moins correspond à une distance collimateur-détecteur supérieure au dixième de la hauteur septale du collimateur et à un degré de plxellisation dans le plan de détection supérieur à 1,
- on calcule la valeur de l'indicateur de mérite pour chaque fréquence spatiale d'intérêt et pour chaque configuration d'acquisition précédemment définies, et on compare les valeurs d'indicateur de mérite obtenues,
- si l'on souhaite dimensionner un dispositif de détection destiné à ne fonctionner que dans une seule configuration d'acquisition, on sélectionne :

    ♦ soit la configuration d'acquisition offrant le meilleur compromis sur toute la plage de fréquences spatiales d'intérêt,
    ♦ soit la configuration d'acquisition fournissant les meilleures valeurs d'indicateur de mérite sur une partie essentielle de la plage de fréquences spatiales d'intérêt.

- si l'on souhaite dimensionner un dispositif de détection destiné à fonctionner dans plusieurs configurations d'acquisition, on sélectionne le modèle structurel et au moins deux des configurations d'acquisition dudit modèle structurel offrant le meilleur compromis respectivement sur deux parties essentielles de la plage de fréquences spatiales d'intérêt.

15. Procédé de dimensionnement selon l'une des revendications 11 à 14, **caractérisé en ce que** l'indicateur de mérite utilisé est choisi parmi : l'indicateur connu sous le nom de Détective Quantum Efficiency, un rapport contraste à bruit.

16. Procédé de reconstruction d'une image d'une source de rayonnements photoniques, dans lequel :

- on utilise un dispositif de détection de rayonnements photoniques comprenant ;

♦ un collimateur (3) comprenant une pluralité de canaux (9, 10, 11),
♦ un détecteur (2) comprenant un matériau détecteur et présentant, du côté du collimateur, un plan frontal (4) dit plan de détection,
♦ des moyens de détermination d'une information relative à la localisation, selon des directions X et Y parallèles au plan de détection, d'une interaction de photon avec le matériau détecteur, ces moyens, dits moyens de localisation dans le plan de détection, permettant d'une part de définir une partition du plan de détection en pixels physiques ou virtuels de dimensions transversales inférieures à celles des canaux du collimateur, et d'autre part d'associer l'un desdits pixels à chaque interaction de photon,

- on expose le dispositif de détection à une source de rayonnements photoniques, selon au moins un angle de vue,

**caractérisé en ce que** :

- durant l'exposition, on réalise au moins deux opérations d'acquisition de données de rayonnement dans des configurations d'acquisition du dispositif de détection distinctes, au moins l'une desdites configurations d'acquisition correspondant à une distance collimateur-détecteur supérieure au dixième de la hauteur septale du collimateur et à un degré de pixellisation dans le plan de détection supérieur à 1, lesdites configurations d'acquisition étant préalablement sélectionnées au vu de résultats de calculs de valeurs d'un indicateur de mérite sur une plage de fréquences spatiales d'intérêt définie en fonction de l'application visée, chaque opération d'acquisition fournissant un ensemble de données de rayonnement, dit projection unitaire,
- on combine plusieurs des projections unitaires précédemment acquises, pour former un ensemble de données de rayonnement, dit projection combinée, permettant la reconstruction d'une image de la source de rayonnements photoniques.

17. Procédé de reconstruction selon la revendication 16, **caractérisé en ce qu'**on utilise un dispositif de détection comprenant des moyens de réglage de la distance collimateur-détecteur, et **en ce que** les configurations d'acquisition préalablement sélectionnées correspondent à des distances collimateur-détecteur différentes.

**Claims**

1. A detection device for photonic radiation, comprising;

- a collimator (3) comprising a plurality of channels (9, 10, 11),
- a detector (2) comprising a detector material and having, on the collimator side, a frontal plane (4) called detection plane,
- means for determining information relative to the localization, in X and Y directions parallel to the detection plane, of a photon interaction with the detector material, these means, called localization means in the detection plane, being able, on the one hand, to define a partitioning of the detection plane in physical or virtual pixels with transversal dimensions smaller than those of the collimator channels, and on the other hand, to associate one of said pixels with each photon interaction,

the device further showing at least in one previously selected acquisition configuration, a degree of pixelation in the detection plane greater than 1 and a distance (c) between collimator and detection plane, called collimator-detector distance, greater than one tenth of the septal height (h) of the collimator, wherein said septal height is defined as being the maximum dimension of the collimator according to a direction orthogonal to the detection plane.

**2.** The detection device according to claim 1, **characterized in that** the localization means in the detection plane are suitable for defining a virtual over-pixelation in the detection plane.

**3.** The detection device according to one of claims 1 or 2, **characterized in that** it comprises means (14) for adjusting the collimator-detector distance.

**4.** The detection device according to any one of claims 1-3, **characterized in that** it comprises image reconstruction means suitable for determining combined projection, including a set of radiation data allowing the reconstruction of an image of the photonic radiation source, starting from a plurality of radiation data sets, called unitary projections, each unitary projection resulting from an acquisition operation of radiation data per exposure of the detection device to the photonic radiation source.

**5.** The detection device according to one of claims 1 to 4, **characterized in that** the collimator-detector distance (c) is smaller than the septal height of the collimator in any acquisition configuration.

**6.** The detection device according to one of claims 1 to 5, **characterized in that** the collimator (3) has a central axis and constant septal thickness in at least one plane orthogonal to its central axis.

**7.** The detection device according to one of claims 1 to 6, **characterized in that** the collimator channels (9, 10, 11) are parallel, and each collimator channel (9) corresponds with a unique physical pixel (5) of the detector and reciprocally.

**8.** The detection device according to one of claims 1 to 7, **characterized in that** the detector material is a semi-conductor material.

**9.** The detection device according to claim 8, **characterized in that** it further comprises means for determining information relative to the depth of a photon interaction in the detector material, these means, called depth localization means, being able to define a partitioning of the depth of the detector material in a plurality of virtual layers and to associate one of said layers with each photon interaction.

**10.** The detection device according to claim 9, intended for use in mammography type applications, **characterized in that** :

- the septal height of the collimator is between 10 mm and 20 mm;
- the localization means in the detection plane are suitable for defining virtual pixels with a pitch between 0.1 mm and 0.4 mm;
- the depth localization means are suitable for defining a partitioning of the semi-conductor material in at least three virtual layers, and
- the collimator-detector distance is comprised between one fourth and one half of the septal height of the collimator, at least in a previously selected acquisition configuration.

**11.** A dimensioning method for a photonic radiation detection device, the detection device comprising:

- a collimator (3) comprising a plurality of channels (9, 10, 11),
- a detector (2) comprising a detector material and having, on the collimator side, a frontal plane (4) called detection plane,
- means for determining information relative to the localization, in X and Y directions parallel to the detection plane, of a photon interaction with the detector material, these means, called localization means in the detection plane, being able, on the one hand, to define a partitioning of the detection plane in physical or virtual pixels with transversal dimensions smaller than those of the collimator channels, and on the other hand, to associate one of said pixels with each photon interaction,

the method comprising :

- defining at least one spatial frequency of interest as a function of the target application,
- defining a structural model of the detection device, which is determined by a set of parameter values for structural dimensioning of collimator and detector,
- defining at least two acquisition configurations of said structural model, wherein each acquisition configuration is determined by a collimator-detector distance and a degree of pixelation, at least one of said acquisition configurations corresponding with a collimator-detector distance greater than one tenth of the septal height of the collimator and a degree of pixelation in the detection plane greater than 1,
- using a merit indicator representing the signal over noise ratio and/or the sensitivity and/or the spatial resolution of the detection device in function of the spatial frequency,
- calculating the value of this merit indicator for each spatial frequency of interest and for each previously defined acquisition configuration,
- comparing the obtained merit indicator values, and selecting at least one of the acquisition configurations based on the results of this comparison.

**12.** The dimensioning method according to claim 11, **characterized in that**;

- a range of spatial frequencies of interest is defined in function of the target application,
- if it is desired to dimension a detection device intended to function in only one acquisition configuration, a selection is made of:

o either, the acquisition configuration offering the best compromise over the whole range of spatial frequencies of interest,
o or the acquisition configuration providing the best merit indicator values over an essential part of the range of spatial frequencies of interest,

- if it is desired to dimension a detection device intended to function in several acquisition configurations, a selection is made of at least the two acquisition configurations providing the best merit indicator values respectively over two essential parts of the range of spatial frequencies of interest.

**13.** The dimensioning method according to claim 12, **characterized in that** the acquisition configuration is selected providing the best merit indicator values over an upper part of the range of spatial frequencies of interest, and the acquisition configuration providing the best merit indicator values over the lower part of the range of spatial frequencies of interest.

**14.** The dimensioning method according to any one of claims 11 to 13, **characterized in that** :

- several structural different models are defined,
- for each structural model one or more acquisition configurations are defined, at least one of said acquisition configurations corresponds with a collimator-detector distance greater than one tenth of the septal height of the collimator and a degree of pixilation in the detection plan greater than 1,
- the value of the merit indicator for each spatial frequency of interest and for each previously defined acquisition configuration is calculated and the obtained merit indicator values are compared,
- if it is desired to dimension a detection device intended to function in only one acquisition configuration, a selection is made of :

o either, the acquisition configuration offering the best compromise over the whole range of spatial frequencies of interest,
o or the acquisition configuration providing the best merit indicator values over an essential part of the range of spatial frequencies of interest,

- if it is desired to dimension a detection device intended to function in several acquisition configurations, a selection is made of at least the two acquisition configurations providing the best merit indicator values respectively over two essential parts of the range of spatial frequencies of interest.

**15.** The dimensioning device according to any one of claims 11 to 14, **characterized in that** the merit indicator used is selected among : the indicated known under the name "Detective Quantum Efficiency", a signal over noise ratio.

**16.** An image reconstruction method for a source of photonic radiation, in which

- a photonic radiation detection device is used, comprising:

o a collimator (3) comprising a plurality of channels (9, 10, 11),

o a detector (2) comprising a detector material and having, on the collimator side, a frontal plane (4) called detection plane,

o means for determining information relative to the localization, in X and Y directions parallel to the detection plane, of a photon interaction with the detector material, these means, called localization means in the detection plane, being able, on the one hand, to define a partitioning of the detection plane in physical or virtual pixels with transversal dimensions smaller than those of the collimator channels, and on the other hand, to associate one of said pixels with each photon interaction,

o the method comprising exposing the detection device to a source of photonic radiation, according to at least one view angle,

**characterized in that**, during the exposure, at least two acquisition operations of radiation data are performed, in different acquisition configurations of the detection device, at least one of said acquisition configurations corresponding with a collimator-detector distance greater than one tenth of the septal height of the collimator and a degree of pixelation in the detection plane greater than 1, these acquisition configurations being selected in advance based on the calculation results of a merit indicator values over a range of spatial frequencies of interest defined in function of the target application, each acquisition operation providing a set of radiation data, called unitary projection,

o several of the previously acquired unitary projections are combined, to form a set of radiation data, called combined projection, allowing image reconstruction of the photonic radiation source.

17. The image reconstruction method according to claim 16, **characterized in that** it uses a detection device comprising means for adjusting the collimator-detector distance, and **in that** the previously selected acquisition configurations correspond with different collimator-detector distances.


**Patentansprüche**

1. Vorrichtung zur Detektion von Photonenstrahlungen, umfassend:

- einen Kollimator (3), der eine Vielzahl von Kanälen (9, 10, 11) umfasst,
- einen Detektor (2), der ein Detektionsmaterial umfasst und der auf der Seite des Kollimator eine Frontalebene (4), Detektionsebene genannt, aufweist,
- Mittel zum Bestimmen einer Information bezüglich der Lokalisierung, in zu der Detektionsebene parallel verlaufenden Richtungen X und Y, einer Photonenwechselwirkung mit dem Detektionsmaterial, wobei diese Mittel, Mittel zum Lokalisieren in der Detektionsebene genannt, einerseits ermöglichen, eine Aufteilung der Detektionsebene in physische oder virtuelle Pixel, die kleinere Querabmessungen als die Kanäle des Kollimators aufweisen, zu definieren, und andererseits ermöglichen, eines der Pixel einer jeden Photonenwechselwirkung zuzuordnen,

**dadurch gekennzeichnet, dass** sie, wenigstens bei einer zuvor ausgewählten Erfassungskonfiguration, einen Pixelierungsgrad in der Detektionsebene größer als 1 sowie einen Abstand (c) zwischen dem Kollimator und der Detektionsebene, Kollimator-Detektor-Abstand genannt, aufweist, der größer als das Zehntel einer Septumhöhe (h) des Kollimators ist, wobei die Septumhöhe als die maximale Abmessung des Kollimators in einer zu der Detektionsebene orthogonalen Richtung definiert ist.

2. Detektionsvorrichtung nach Anspruch 1, **dadurch gekennzeichnet, dass** die Mittel zum Lokalisieren in der Detektionsebene geeignet sind, eine virtuelle Überpixelierung in der Detektionsebene zu definieren.

3. Detektionsvorrichtung nach einem der Ansprüche 1 oder 2, **dadurch gekennzeichnet, dass** sie Mittel (14) zum Einstellen des Kollimator-Detektor-Abstandes umfasst.

4. Detektionsvorrichtung nach einem der Ansprüche 1 bis 3, **dadurch gekennzeichnet, dass** sie Bildrekonstruktionsmittel umfasst, die geeignet sind, einen Satz von Strahlungsdaten, kombinierte Projektion genannt, zu bestimmen, der die Rekonstruktion eines Bildes der Photonenstrahlungsquelle anhand einer Vielzahl von Strahlungsdatensätzen, Einzelprojektionen genannt, ermöglicht, wobei jede Einzelprojektion aus einem Vorgang zur Erfassung von Strahlungsdaten durch Exposition der Detektionsvorrichtung gegenüber der Photonenstrahlungsquelle resultiert.

5. Detektionsvorrichtung nach einem der Ansprüche 1 bis 4, **dadurch gekennzeichnet, dass** bei jeder Erfassungskonfiguration der Kollimator-Detektor-Abstand (c) kleiner als die Septumhöhe des Kollimators ist.

6. Detektionsvorrichtung nach einem der Ansprüche 1 bis 5, **dadurch gekennzeichnet, dass** der Kollimator (3) eine Mittelachse und eine konstante Septumdicke in wenigstens einer zu seiner Mittelachse orthogonalen Ebene aufweist.

7. Detektionsvorrichtung nach einem der Ansprüche 1 bis 6, **dadurch gekennzeichnet, dass** die Kanäle (9, 10, 11) des Kollimators parallel verlaufen und dass jeder Kanal (9) des Kollimators einem einzelnen physischen Pixel (5) des Detektors entspricht sowie umgekehrt.

8. Detektionsvorrichtung nach einem der Ansprüche 1 bis 7, **dadurch gekennzeichnet, dass** das Detektionsmaterial ein Halbleitermaterial ist.

9. Detektionsvorrichtung nach Anspruch 8, **dadurch gekennzeichnet, dass** sie Mittel zum Bestimmen einer Information bezüglich der Tiefe einer Photonenwechselwirkung in dem Detektionsmaterial umfasst, wobei diese Mittel, Mittel zum Lokalisieren in der Dicke genannt, ermöglichen, eine Aufteilung der Dicke des Detektionsmaterials in eine Vielzahl von virtuellen Schichten zu definieren und eine der Schichten einer jeden Photonenwechselwirkung zuzuordnen.

10. Detektionsvorrichtung nach Anspruch 9, die dazu bestimmt ist, bei Anwendungen vom Typ Mammographie verwendet zu werden, **dadurch gekennzeichnet, dass**:

   - der Kollimator eine Septumhöhe im Bereich zwischen 10 mm und 20 mm aufweist,
   - die Mittel zum Lokalisieren in der Detektionsebene geeignet sind, virtuelle Pixel mit einem Abstand zwischen 0,1 mm und 0,4 mm zu definieren,
   - die Mittel zum Lokalisieren in der Dicke geeignet sind, eine Aufteilung des Halbleitermaterials in wenigstens drei virtuelle Schichten zu definieren,
   - der Kollimator-Detektor-Abstand, wenigstens bei einer zuvor ausgewählten Erfassungskonfiguration, zwischen dem Viertel und der Hälfte der Septumhöhe des Kollimators beträgt.

11. Verfahren zur Dimensionierung einer Vorrichtung zur Detektion von Photonenstrahlungen, wobei die Detektionsvorrichtung umfasst:

   - einen Kollimator (3), der eine Vielzahl von Kanälen (9, 10, 11) umfasst,
   - einen Detektor (2), der ein Detektionsmaterial umfasst und der auf der Seite des Kollimators eine Frontalebene (4), Detektionsebene genannt, aufweist,
   - Mittel zum Bestimmen einer Information bezüglich der Lokalisierung, in zu der Detektionsebene parallel verlaufenden Richtungen X und Y, einer Photonenwechselwirkung mit dem Detektionsmaterial, wobei diese Mittel, Mittel zum Lokalisieren in der Detektionsebene genannt, einerseits ermöglichen, eine Aufteilung der Detektionsebene in physische oder virtuelle Pixel, die kleinere Querabmessungen als die Kanäle des Kollimators aufweisen, zu definieren, und andererseits ermöglichen, eines der Pixel einer jeden Photonenwechselwirkung zuzuordnen,

   wobei bei dem Verfahren:

   - wenigstens eine interessierende Raumfrequenz in Abhängigkeit der beabsichtigten Anwendung definiert wird,
   - ein Strukturmodell der Detektionsvorrichtung definiert wird, das durch einen Satz von Strukturparameterwerten der Dimensionierung des Kollimators und des Detektors bestimmt ist,
   - wenigstens zwei Erfassungskonfigurationen des Strukturmodells definiert werden, wobei jede Erfassungskonfiguration durch einen Kollimator-Detektor-Abstand und einen Pixelierungsgrad bestimmt ist, wobei wenigstens eine der Erfassungskonfigurationen einem Kollimator-Detektor-Abstand, der größer als das Zehntel der Septumhöhe des Kollimators ist, und einem Pixelierungsgrad in der Detektionsebene größer als 1 entspricht,
   - ein Güteindikator verwendet wird, der ermöglicht, das Signal-Rausch-Verhältnis und/oder die Empfindlichkeit und/oder die räumliche Auflösung der Detektionsvorrichtung in Abhängigkeit der Raumfrequenz darzustellen,
   - der Wert dieses Güteindikators für jede zuvor definierte interessierende Raumfrequenz und für jede zuvor definierte Erfassungskonfiguration berechnet wird,
   - die erhaltenen Güteindikatorwerte verglichen werden und im Hinblick auf die Ergebnisse dieses Vergleichs wenigstens eine der Erfassungskonfigurationen ausgewählt wird.

**12.** Dimensionierungsverfahren nach Anspruch 11, **dadurch gekennzeichnet, dass**:

- ein Bereich von interessierenden Raumfrequenzen in Abhängigkeit der beabsichtigten Anwendung definiert wird,
- wenn man eine Detektionsvorrichtung dimensionieren möchte, die dazu bestimmt ist, lediglich in einer einzigen Erfassungskonfiguration zu arbeiten, man:

• entweder die Erfassungskonfiguration wählt, die den besten Kompromiss über den gesamten Bereich von interessierenden Raumfrequenzen bietet,
• oder die Erfassungskonfiguration wählt, welche die besten Güteindikatorwerte über einen wesentlichen Teil des Bereichs von interessierenden Raumfrequenzen liefert,

- wenn man eine Detektionsvorrichtung dimensionieren möchte, die dazu bestimmt ist, in mehreren Erfassungskonfigurationen zu arbeiten, wenigstens die beiden Erfassungskonfigurationen ausgewählt werden, die die besten Güteindikatorwerte jeweils über zwei wesentliche Teile des Bereichs von interessierenden Raumfrequenzen liefern.

**13.** Dimensionierungsverfahren nach Anspruch 12, **dadurch gekennzeichnet, dass** die Erfassungskonfiguration ausgewählt wird, welche die besten Güteindikatorwerte über einen oberen Teil des Bereichs von interessierenden Raumfrequenzen liefert, sowie die Erfassungskonfiguration, welche die besten Güteindikatorwerte über einen unteren Teil des Bereichs von interessierenden Raumfrequenzen liefert.

**14.** Dimensionierungsverfahren nach einem der Ansprüche 11 bis 13, **dadurch gekennzeichnet, dass**:

- mehrere unterschiedliche Strukturmodelle definiert werden,
- für jedes Strukturmodell eine oder mehrere Erfassungskonfiguration(en) definiert wird (werden), von denen wenigstens eine einem Kollimator-Detektor-Abstand, der größer als das Zehntel der Septumhöhe des Kollimators ist, sowie einem Pixelierungsgrad in der Detektionsebene größer als 1 entspricht,
- der Wert des Güteindikators für jede zuvor definierte interessierende Raumfrequenz und für jede zuvor definierte Erfassungskonfiguration berechnet wird und die erhaltenen Güteindikatorwerte verglichen werden,
- wenn man eine Detektionsvorrichtung dimensionieren möchte, die dazu bestimmt ist, lediglich in einer einzigen Erfassungskonfiguration zu arbeiten, man:

• entweder die Erfassungskonfiguration wählt, die den besten Kompromiss über den gesamten Bereich von interessierenden Raumfrequenzen bietet,
• oder die Erfassungskonfiguration wählt, welche die besten Güteindikatorwerte über einen wesentlichen Teil des Bereichs von interessierenden Raumfrequenzen liefert,

- wenn man eine Detektionsvorrichtung dimensionieren möchte, die dazu bestimmt ist, in mehreren Erfassungskonfigurationen zu arbeiten, das Strukturmodell sowie wenigstens zwei der Erfassungskonfigurationen des Strukturmodells gewählt werden, welche den besten Kompromiss jeweils über zwei wesentliche Teile des Bereichs von interessierenden Raumfrequenzen liefern.

**15.** Dimensionierungsverfahren nach einem der Ansprüche 11 bis 14, **dadurch gekennzeichnet, dass** der verwendete Güteindikator aus dem unter dem Namen Detective Quantum Efficiency bekannten Indikator, einem Kontrast-Rausch-Verhältnis ausgewählt ist.

**16.** Verfahren zur Rekonstruktion eines Bildes einer Photonenstrahlungsquelle, wobei:

- eine Vorrichtung zur Detektion von Photonenstrahlungen verwendet wird, die umfasst:

• einen Kollimator (3), der eine Vielzahl von Kanälen (9, 10, 11) umfasst,
• einen Detektor (2), der ein Detektionsmaterial umfasst und der auf der Seite des Kollimators eine Frontalebene (4), Detektionsebene genannt, aufweist,
• Mittel zum Bestimmen einer Information bezüglich der Lokalisierung, in zu der Detektionsebene parallel verlaufenden Richtungen X und Y, einer Photonenwechselwirkung mit dem Detektionsmaterial, wobei diese Mittel, Mittel zum Lokalisieren in der Detektionsebene genannt, einerseits ermöglichen, eine Aufteilung der Detektionsebene in physische oder virtuelle Pixel, die kleinere Querabmessungen als die Kanäle des Kollimators aufweisen, zu definieren, und andererseits ermöglichen, eines der Pixel einer jeden Photonenwechselwirkung zuzuordnen,

- die Detektionsvorrichtung unter wenigstens einem Blickwinkel einer Photonenstrahlungsquelle ausgesetzt wird,

**dadurch gekennzeichnet, dass**:

- während der Exposition wenigstens zwei Vorgänge zur Erfassung von Strahlungsdaten in unterschiedlichen Erfassungskonfigurationen der Detektionsvorrichtung durchgeführt werden, wobei wenigstens eine der Erfassungskonfigurationen einem Kollimator-Detektor-Abstand, der größer als das Zehntel der Septumhöhe des Kollimators ist, und einem Pixelierungsgrad in der Detektionsebene größer als 1 entspricht, wobei die Erfassungskonfigurationen im Hinblick auf Ergebnisse von Berechnungen von Werten eines Güteindikators über einen in Abhängigkeit der beabsichtigten Anwendung definierten Bereich von interessierenden Raumfrequenzen vorher ausgewählt werden, wobei jeder Erfassungsvorgang einen Satz von Strahlungsdaten, Einzelprojektion genannt, liefert,
- mehrere der zuvor erfassten Einzelprojektionen kombiniert werden, um einen Satz von Strahlungsdaten, kombinierte Projektion genannt, zu bilden, der die Rekonstruktion eines Bildes der Photonenstrahlungsquelle ermöglicht.

17. Rekonstruktionsverfahren nach Anspruch 16, **dadurch gekennzeichnet, dass** eine Detektionsvorrichtung verwendet wird, die Mittel zum Einstellen des Kollimator-Detektor-Abstandes umfasst, und dass die zuvor ausgewählten Erfassungskonfigurationen unterschiedlichen Kollimator-Detektor-Abständen entsprechen.

Fig. 1a          Fig. 1b

Fig. 2

27

Fig. 3

Fig. 4

Fig. 5

Fig. 6

Fig. 7

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008046971 A

**Littérature non-brevet citée dans la description**

- **J. TABARY ; R. GUILLEMAUD ; F. MATHY.** Combination of high resolution analytically computed uncollided flux images with low resolution Monte-Carlo computed scattered flux images. *IEEE Trans. Nucl. Sci.,* 2004, vol. 51 (1), 212-217